# EUROPEAN PATENT SPECIFICATION

(11) **EP 2 512 133 B1**
(45) Date of publication and mention of the grant of the patent: **18.07.2018**
(21) Application number: 09852037.2
(22) Date of filing: 07.12.2009
(51) Int. Cl.: H04N 7/18, G06K 9/00

(54) **VEHICLE PERIPHERY IMAGE DISPLAY SYSTEM**
PERIPHERES BILDANZEIGESYSTEM FÜR EIN FAHRZEUG
SYSTÈME D'AFFICHAGE D'IMAGE PÉRIPHÉRIQUE DE VÉHICULE

(43) Date of publication of application: 17.10.2012
(73) Proprietor: Clarion Co., Ltd., Bunkyo-ku Tokyo 112-8608 (JP)
(72) Inventor: SATOH, Noriyuki, Saitama 330-0081 (JP)
(74) Representative: Ilgart, Jean-Christophe
(86) International application number: PCT/JP2009/070488
(87) International publication number: WO 2011/070640

(56) References cited:
- WO-A1-2009/104675
- JP-A- 2002 337 605
- JP-A- 2003 244 688
- JP-A- 2004 350 303
- JP-A- 2005 335 410
- JP-A- 2008 171 314
- US-A1- 2003 108 222
- US-A1- 2009 237 268
- US-B1- 6 476 731

## Description

### Technical field

The present invention relates to a vehicle peripheral image display system for displaying a vehicle peripheral image including a blind spot on a monitor screen in a vehicle interior based on a camera image obtained from an on-vehicle blind camera.

### BACKGROUND ART

Currently, in the practically-used side-view monitor system, a side camera (CCD camera and the like) is set inside of a side mirror and a real camera image from the side camera is displayed on a monitor screen of a front display unit which is also used as a navigation system. That is, by displaying a part of side portion of a front part of a vehicle which is in a blind spot from a driver on a monitor screen, the driver can recognize a situation of the part which is in a blind spot.

However, since the side camera is disposed in the side mirror, there is a large disparity between a viewpoint of the camera and that of the driver and a shape of an obstacle or another object in the camera image is completely different from a shape viewed from a driver's seat.

To the contrary, in a normal case, by being accustomed, the driver reconstitutes the camera image in his head and reconstructs and judges the positional relationship of the objects to be matched with the image viewed by the driver. On the other hand, in a case of the driver who is not accustomed or in an instant situation, a consistency between the image on the screen and the image viewed from the driver's seat is degraded and a feeling of strangeness occurs.

In order to eliminate such a feeling of strangeness, the camera image obtained by the blind spot camera provided outside of a vehicle body is converted into a virtual camera image which is to be viewed from a position of a driver's viewpoint to generate a converted external image. Further, a visually confirmed area image where a blind spot area is removed from a camera image obtained by a driver's viewpoint camera provided at a vicinity of the driver's viewpoint is generated. Then, a vehicle peripheral image display system obtaining a composite image where the converted external image is composed onto the blind spot area removed from the visually confirmed area image has been proposed (see, for example, Patent Document 1).

More particularly, a viewpoint conversion is performed on an image of a back camera provided on a trunk part of a vehicle exterior into an image to be viewed from the driver's viewpoint in a backward direction. In the image composition, within the composite image of the backward field of view, a live image from the inside camera image is used for a part viewed from a window. On a part which is in a blind spot by the seat, the trunk and the like and therefore is not obtained by the camera, the image of the external camera is overlapped by the image processing.

In this case, there is high level of technical difficulty to convert the two screens into a screen where the two screens are smoothly continuous. Therefore divided lines are made less noticeable by matching boundary lines to cut out the image with a window frame and the others in a vehicle shape, and performing superimposing of edge parts such as a window frame with a thick frame shape.

### Prior Art Documents

### Patent Documents

Patent Document 1: Japanese Patent Application Publication No.2004-350303.

### SUMMARY OF THE INVENTION

### PROBLEM TO BE SOLVED BY THE INVENTION

However, in the conventional vehicle peripheral image display system, there are following problems.
(1) Although mainly, two camera images are cut out and combined, edge parts such as a window frame and the like in the images are emphasized and detected, and superimposing is performed by using the images to try to eliminate the blind spot and the feeling of strangeness. However, the elimination is limited and the feeling of strangeness occurs with the image.
(2) In case where a blind spot camera having a wide field of angle in upward and downward directions of elevation and depression angle directions is used as described as an example, the field of angle of the inside camera (driver's viewpoint camera) is sufficiently covered and the contribution of the image of the inside camera to eliminate the blind spot is only to a part of the field of angle, such as an upper part of the trunk and the like. Therefore, there are many wasteful parts in the system.
(3) A superimposing frame by emphasizing edges, which is used when the camera images are combined, requires adding image processing function. However, the effect for giving the driver recognition as if the driver views the blind spot part of the vehicle is not sufficient.

Then, Applicant of the present application has proposed a vehicle peripheral image display system (Japanese Patent Application No. 2008-39395 filed on February 20, 2008), performing a viewpoint conversion of a real camera image inputted from an on-vehicle blind spot camera into a virtual camera image to be viewed from a position of a driver's viewpoint and performing an image composition for superimposing a semitransparent image of a vehicle interior image on the virtual camera image to express a virtual camera image through a semitransparent vehicle interior image.

However, in an implementing step of the proposed vehicle peripheral image display system, the following problems have been found. For example, when it is getting dark, luminance and hue of the virtual camera image and the semitransparent vehicle interior image are close to each other. If the semitransparent vehicle interior image is superimposed on the virtual camera image, an outline of the vehicle and a color shade in the vehicle interior are blended in a subtle color shade of the external image. Furthermore, when a light of an oncoming vehicle or the like enters the on-vehicle blind spot camera, if the semitransparent vehicle interior image is superimposed on the high luminance virtual camera image, the semitransparent vehicle interior image becomes whitish at a whole and transparent. As described above, depending on a surrounding environment where the real camera image is obtained, the virtual camera image is not clearly distinguished from the semitransparent vehicle interior image and therefore visibility is degraded.

The present invention was made while addressing the above problems, and is to provide a vehicle peripheral image display system in which a virtual camera image is clearly distinguished from a semitransparent vehicle interior image and an outside situation which is in a blind spot from a driver can be transmitted and clearly visually confirmed with a positional relationship with respect to the vehicle regardless of a surrounding environment where a real camera image is obtained.

### MEANS FOR SOLVING THE PROBLEM

In order to achieve the above object, in the present invention, an on-vehicle blind spot camera provided on a vehicle and imaging a peripheral of the vehicle, a monitor set at a position in a vehicle interior for a driver to visually confirm the monitor, and a monitor image generating means generating a display image to be displayed on the monitor based on a real camera image input from the on-vehicle blind spot camera are provided. In the vehicle peripheral image display system, the monitor image generating means includes an image processor, an external image color judging section, and a vehicle interior image color automatically adjusting section, an image component composite circuit. The image processor performs a viewpoint conversion of the real camera image input from the on-vehicle blind spot camera into a virtual camera image to be viewed from a position of a driver's viewpoint. The external image color judging section judges a color of an external image from the on-vehicle blind spot camera based on at least one of luminance, hue, saturation and brightness. The vehicle interior image color automatically adjusting section automatically adjusts at least one of luminance, hue, saturation and brightness of a semitransparent vehicle interior image which is a semitransparent image of a vehicle interior image based on the color judgment result of the external image so as to enhance visibility for the external image. The image component composite circuit performs an image composition superimposing the semitransparent vehicle interior image from the vehicle interior image color automatically adjusting section on the virtual camera image from the image processor to generate a composite image expressing the virtual camera image to be viewed through the semitransparent vehicle interior image.

### EFFECT OF THE INVENTION

According to a vehicle peripheral image display system of the present invention, in an image composite circuit, the composite image is generated by performing an image composition for superimposing a semitransparent vehicle interior image from a vehicle interior image color automatic adjustment section on a virtual camera image from an image processing section to generate a composite image expressing the virtual camera image through the semitransparent vehicle interior image and is displayed on a monitor.

That is, in the image processing section, a viewpoint conversion of a real camera image input from an on-vehicle blind spot camera into the virtual camera image to be viewed from a position of a driver's viewpoint and thereby the driver who views the composite image displayed on the monitor can intuitively recognize a part in a blind spot from the driver in the virtual camera image without disparity.

Then, in an external image color judging section, the real camera image input from the on-vehicle blind spot camera is set as an external image, average brightness and color shade of the external image are judged. In the vehicle interior image color automatic adjustment section, brightness and color shade of the semitransparent vehicle interior image which is a semitransparent image of a vehicle interior image are automatically adjusted based on a judgment result of the external image color judging section so as to improve visibility of the external image.

Therefore, the virtual camera image is expressed on the monitor through the semitransparent vehicle interior image in which visibility is improved with respect to the external image. Accordingly, for example, regardless of the surrounding environment condition such as daytime, time when it is getting dark, nighttime, and the like, the virtual camera image is clearly distinguished from the semitransparent vehicle interior image. Therefore, the outside situation which is in a blind spot from the driver by the virtual camera image can be transmitted and visually confirmed in a positional relationship with respect to the vehicle by the semitransparent vehicle interior image.

As a result, regardless of the surrounding environment condition where the real camera image is obtained, the virtual camera image is clearly distinguished from the semitransparent vehicle interior image and the outside situation which is in a blind spot from the driver can be transmitted and clearly visually confirmed in the positional relationship with respect to the vehicle.

### BRIEF DESCRIPTION OF DRAWINGS

[FIG.1] Fig. 1 is an entire system block diagram showing a see-through side-view monitor system A1 (an example of a vehicle peripheral image display system) according to Embodiment 1.
[FIG.2] Fig. 2 is an explanatory view showing Example 1 of obtained luminance-hue judgment data by a luminance-hue judgment sensor in the see-through side-view monitor system A1 according to Embodiment 1.
[FIG.3] Fig. 3 is an explanatory view showing Example 2 of obtained luminance-hue judgment data by a luminance-hue judgment sensor in the see-through side-view monitor system A1 according to Embodiment 1.
[FIG.4] Fig. 4 is an explanatory view showing Example 3 of obtained luminance-hue judgment data by a luminance-hue judgment sensor in the see-through side-view monitor system A1 according to Embodiment 1.
[FIG.5] Fig. 5 is a flowchart showing a flow of an external image luminance follow-up display control processing performed in a control circuit 45 in the see-through side-view monitor system A1 according to Embodiment 1.
[FIG.6] Fig. 6 is a flowchart showing a flow of a luminance abrupt change handling display control processing performed in the control circuit 45 in the see-through side-view monitor system A1 according to Embodiment 1.
[FIG.7] Fig. 7 is a flowchart showing a flow of a hue conversion display control processing performed in the control circuit 45 in the see-through side-view monitor system A1 according to Embodiment 1.
[FIG.8] Fig. 8 is a view showing a hue circle used in the hue conversion display control processing according to Embodiment 1.
[FIG.9] Fig. 9 is a flowchart showing a flow of an alarm display control processing performed in the control circuit 45 in the see-through side-view monitor system A1 according to Embodiment 1.
[FIG.10] Fig. 10 is a view showing a vehicle interior still image previously photographed toward a side of a left front part from a position of a driver's viewpoint.
[FIG.11] Fig. 11 is a perspective view showing an image of a state where a vehicle shape is projected on a road surface from a vehicle where the see-through side-view monitor system A1 according to Embodiment 1 is installed.
[FIG.12] Fig. 12 is a view showing an image (opaque part) in case where the image of the vehicle shape projected on the road surface from the vehicle where the see-through side-view monitor system A1 according to Embodiment 1 is installed is transmitted and viewed from the position of the driver's viewpoint.
[FIG.13] Fig. 13 is a view showing an image where the "opaque part DE" of Fig. 12 is set on the vehicle interior image RP shown in Fig.10 in the see-through side-view monitor system A1 according to Embodiment 1.
[FIG.14] Fig. 14 is a view showing a semitransparent vehicle interior image RG where the "opaque part DE," a "transparent part CE," and a "semitransparent part GE" are set on the vehicle interior image RP shown in Fig. 10 in the see-through side-view monitor system A1 according to Embodiment 1.
[FIG.15] Fig. 15 is an image view showing an inverted luminance screen when the semitransparent vehicle interior image RG is inverted and displayed in the see-through side-view monitor system A1 according to Embodiment 1.
[FIG.16] Fig. 16 is an entire system block diagram showing a see-through back-view monitor system A2 (an example of the vehicle peripheral image display system) according to Embodiment 2.
[FIG.17] Fig. 17 is a view showing a semitransparent vehicle interior image RG where the "opaque part DE," a "transparent part CE," and a "semitransparent part GE" are set on the vehicle interior image RP of a back side of the vehicle in the see-through back-view monitor system A2 according to Embodiment 2.
[FIG.18] Fig. 18 is an entire system block diagram showing a see-through front-view monitor system A3 (an example of the vehicle peripheral image display system) according to Embodiment 3.
[FIG.19] Fig. 19 is a flowchart showing a flow of a blending ratio sensor cooperative control processing performed in the control circuit 45 in the see-through front-view monitor system A3 according to Embodiment 3.
[FIG.20] Fig. 20 is a view showing an image where the "opaque part DE" is set on left, right and center divided areas in a front camera image in the see-through front-view monitor system A3 according to Embodiment 3.
[FIG.21] Fig. 21 is a view showing the semitransparent vehicle interior image RG where the "opaque part DE," the "transparent part CE," and the "semitransparent part GE" are set on the vehicle interior image RP in the see-through front-view monitor system A3 according to Embodiment 3.

### DETAILED DESCRIPTION

Hereinafter, as representative examples each implementing a vehicle peripheral image display system of the present invention, blind spot eliminating cameras in three directions are respectively explained by Embodiment 1 to Embodiment 3.

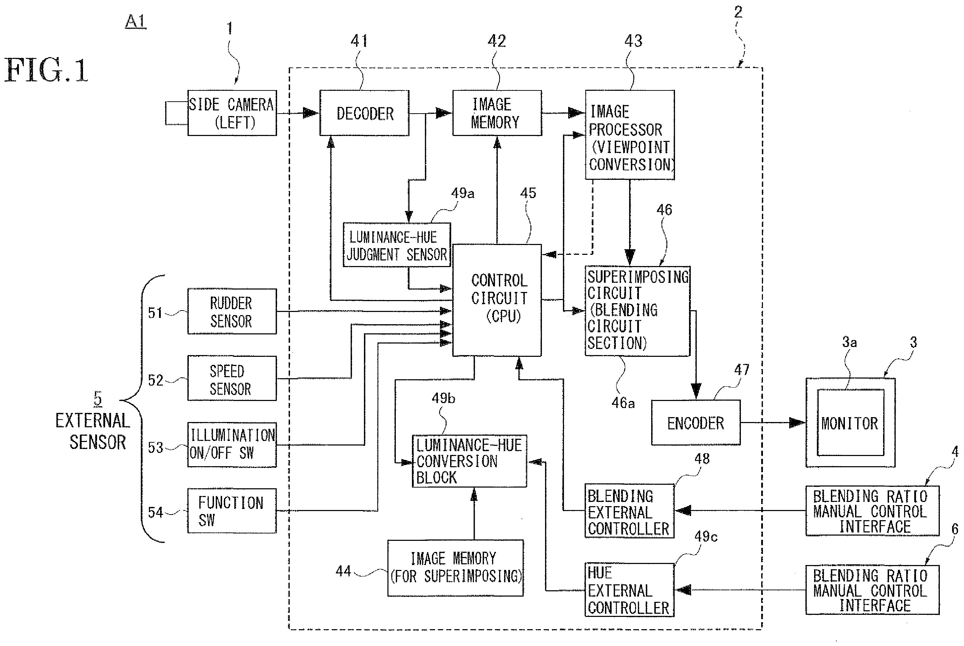

Basically, an entire system configuration includes, as represented in Fig. 1, a blind spot eliminating camera and a digital image processor, which process an image from the camera and a blending processor for a semitransparent image. In a case where a single camera is used, a basic configuration is the same. However, a position and a number of cameras are flexible for a configuration addressing cost and the like.

Furthermore, transparency of a semitransparent part on a monitor is displayed with a transmissivity (initial value of transmissivity) that is initially set. However, it is supposed that transmissivity is not fixed and can be arbitrarily changed in a range from 0 % to 100 % automatically or by an operation of a user (= a driver). It is supposed that transmissivity of each position can be customized by a requirement of a user.

### EMBODIMENT 1

Embodiment 1, using a blind spot eliminating side camera installed in a side mirror or disposed at a vicinity of the side mirror as an on-vehicle blind spot camera, is an example of a see-through side-view monitor system where a side camera image of a side portion of a front part of a vehicle, which is in a blind spot from the driver, is displayed on a monitor as an image to be viewed through from a vehicle interior.

### First, configuration will be explained.

Fig. 1 is an entire system block diagram showing the see-through side-view monitor system A1 (an example of a vehicle peripheral image display system) according to Embodiment 1.

The see-through side-view monitor system A1 according to Embodiment 1 includes, as shown in Fig. 1, a side camera 1 (on-vehicle blind spot camera), an image processing control unit 2 (monitor image generating means), a monitor 3, a blending ratio manual control interface 4 (blending ratio manual operation means), an external sensor 5, and a hue manual control interface 6 (vehicle interior image color manual operation means).

The side camera 1 is built into a left side mirror or disposed at a vicinity of the left side mirror and images a side portion of a front part of the vehicle, which is in a blind spot from the driver. The side camera 1 obtains a real camera image data of the side portion of the front part of the vehicle by an image pickup device (a CCD, a CMOS, or the like).

The monitor 3 is set at a position in the vehicle interior to be visually confirmed by the driver (for example, at a position on an instrument panel, or the like) and receives and display a display image from the image processing control unit 2. The monitor 3 has a display screen 3a by a liquid crystal display, an organic EL display, or the like. Here, as the monitor 3, a monitor in exclusive use for the see-through side-view monitor system A1 may be set, a monitor in exclusive use for the blind spot eliminating camera system may be set, or a monitor which is also used for a navigation system, or the other system may be used.

The image processing control unit 2 generates the display image to the monitor 3 based on input information from the blending ratio manual control interface 4, the external sensor 5, and the hue manual control interface 6 in addition to the real camera image input from the side camera 1.

The blending ratio manual control interface 4 has, for example, a touch panel switch of the monitor 3 and arbitrarily adjusts transmissivity of a "semitransparent part GE" set in the vehicle interior image by a manual operation.

The external sensor 5 is a sensor, a switch, or the like which provides input information to the image processing control unit 2, and includes, as shown in Fig.1, a rudder sensor 51, a speed sensor 52, an illumination ON/OFF switch 53, a function switch 54, and the other sensors or switches. When the function switch 54 is kept ON, a blending circuit section 46a automatically adjusts the transmissivity of the "semitransparent part GE" set in the vehicle interior image so as to enhance the visibility of a composite image displayed on the monitor 3 based on surrounding environment information (daytime, evening, nighttime, weather, and the like) obtained by the external sensor 5 or vehicle information (rudder, vehicle speed, and the like).

The hue manual control interface 6 has, for example, a touch panel switch of the monitor 3 and arbitrarily adjusts an entire hue of the vehicle interior image to be superimposed by a manual operation.

The image processing control unit 2 includes, as shown in Fig.1, a decoder 41, an image memory 42, an image processor 43, an image memory 44 (image storage section), a control circuit (CPU) 45, a superimposing circuit 46 (image composite circuit), an encoder 47, a blending external controller 48, a luminance-hue judgment sensor 49a (external image color judging section), a luminance-hue conversion block 49b (vehicle interior image color automatically adjusting section), and a hue external controller 49c (vehicle interior image color external controller). Hereinafter, each configuration element will be explained.

The decoder 41 performs an analog-digital conversion of the real camera image data input from the side camera 1.

The image memory 42 stores the real camera image data where the conversion into digital is performed, which is input from the decoder 41.

The image processer 43 performs a viewpoint conversion of the real camera image data input from the image memory 42 into a virtual camera image to be viewed from a position of a driver's viewpoint. In the image processor 43, "a viewpoint conversion as if a virtual camera is disposed at a vicinity of the driver's viewpoint" is performed and also "an image processings including various processings (luminance adjustment, color correction, edge correction, and the like)" are also performed.

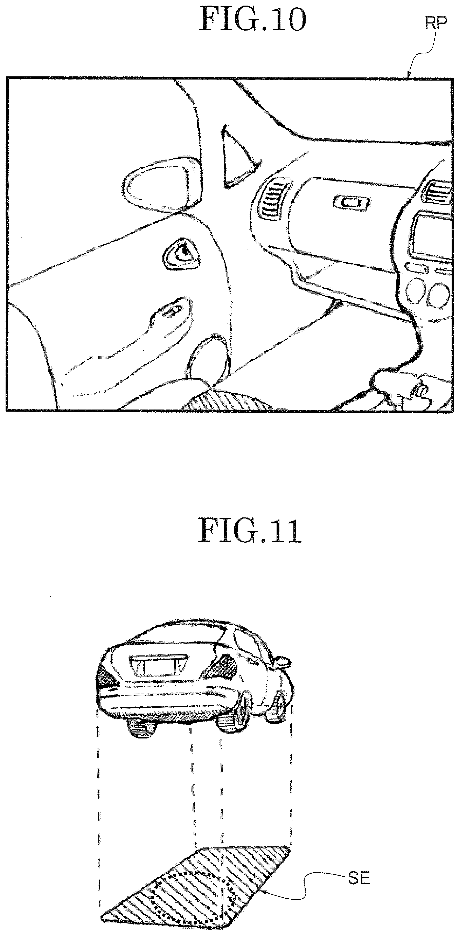

The image memory 44 is a memory for superimposing and stores a vehicle interior image RP (Fig.10) previously photographed from the driver's viewpoint as the vehicle interior image.

The control circuit 45 is a central processing circuit (e.g., a CPU) managing all information processings and control outputs related to image processings according to input information. In the control circuit 45, control programs performing various image processing controls such as an external image luminance follow up display control, a luminance abrupt change handling display control, a hue conversion display control, an alarm display control, and the like are set.

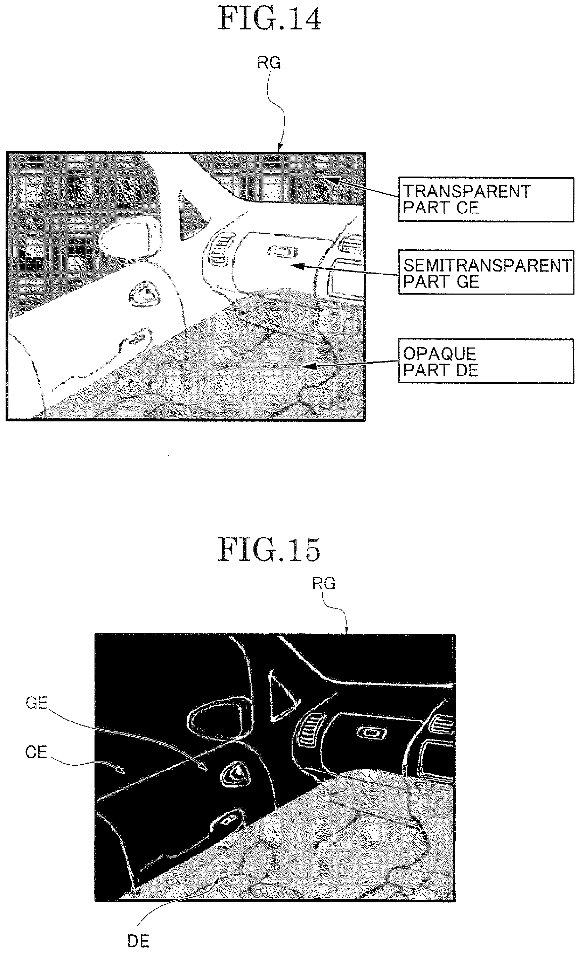

The superimposing circuit 46 basically generates a semitransparent vehicle interior image RG (Fig.14) by generating a semitransparent image of the vehicle interior image RP from the image memory 44, and by image composition superimposing the semitransparent vehicle interior image RG onto the virtual camera image from the image processor 43, a composite image expressing the virtual camera image through the semitransparent vehicle interior image RG is generated.
The superimposing circuit 46 has a blending circuit section 46a dividing the vehicle interior image RP previously photographed from the driver's viewpoint into areas and setting different transmissivities in the respective areas. The blending circuit section 46a sets, within the vehicle interior image RP (Fig. 10), a shade area SE which is obtained by projecting the vehicle onto the road surface as a "opaque part DE" with transmissivity of 0 %, an area corresponding to a window glass of the vehicle as a "transparent part CE" with transmissivity of 100 %, and areas other than the shade area and the window glass area as a "semitransparent part GE" with arbitrary transmissivities (Fig. 14).

The encoder 47 receives the composite image signal where the semitransparent vehicle interior image RG is superimposed on the virtual camera image from the superimposing circuit 46 and outputs the composite image signal to the monitor 3 via the digital-analog conversion.

When receiving a transmissivity adjustment signal from the blending ratio manual control interface 4, the blending external controller 48 outputs a transmissivity control command arbitrarily adjusting the transmissivity of the "semitransparent part GE" set in the vehicle interior image in a range from 0 % to 100 % to the control circuit 45.

The luminance-hue judgment sensor 49a receives the real camera image data of the external image from the side camera 1, judges average luminance and hue based on the real camera image data, and outputs the judgment result to the control circuit 45.

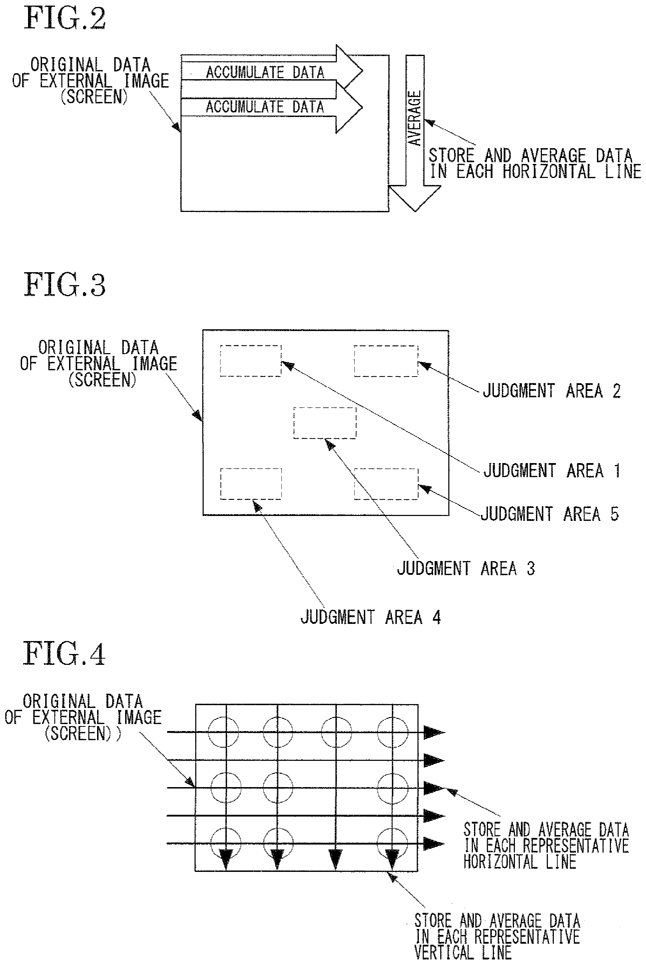

The luminance-hue judgment sensor 49a loads data of each pixel forming the real camera image as a digital data luminance signal Y and a color difference signal CbCr (or RGB data). The luminance-hue judgment sensor 49a accumulates (stores), as shown in Fig. 2, data in each horizontal line in a horizontal scanning line direction and averages the plurality of accumulated data in all scanning lines to judge brightness (luminance) and hue of the entire image. This judging method is the easiest. However, as shown in Fig. 3, particular blocks (judgment areas 1 to 5) may be set at four corners, a center, and the like in the loaded original data (screen) to judge brightness and hue of the entire image by an average in each block. Furthermore, as shown in Fig. 4, grid sample lines (representative vertical lines, representative horizontal lines) in vertical and horizontal directions every several pixels may be set in the loaded original data to judge brightness and hue of the entire image by accumulating (storing) data in each sample line and averaging a plurality of accumulated data.

The luminance-hue conversion block 49b receives the luminance-hue judgment result of the external image from the control circuit 45 and the semitransparent vehicle interior image data from the image memory 44, automatically adjusts the luminance and hue of the semitransparent vehicle interior image so as to enhance the visibility with respect to the luminance and hue of the external image, and outputs the adjusted semitransparent vehicle interior image to the superimposing circuit 46. Furthermore, the luminance-hue conversion block 49b receives a hue control command from the hue external controller 49c and the semitransparent vehicle interior image from the image memory 44, adjusts the hue of the semitransparent vehicle interior image and outputs the adjusted semitransparent vehicle interior image to the superimposing circuit 46.

When receiving the hue adjustment signal from the hue manual control interface 6, the hue external controller 49c outputs a hue control command arbitrarily adjusting the entire hue of the vehicle interior image to be superimposed depending on preference to the luminance-hue conversion block 49b.

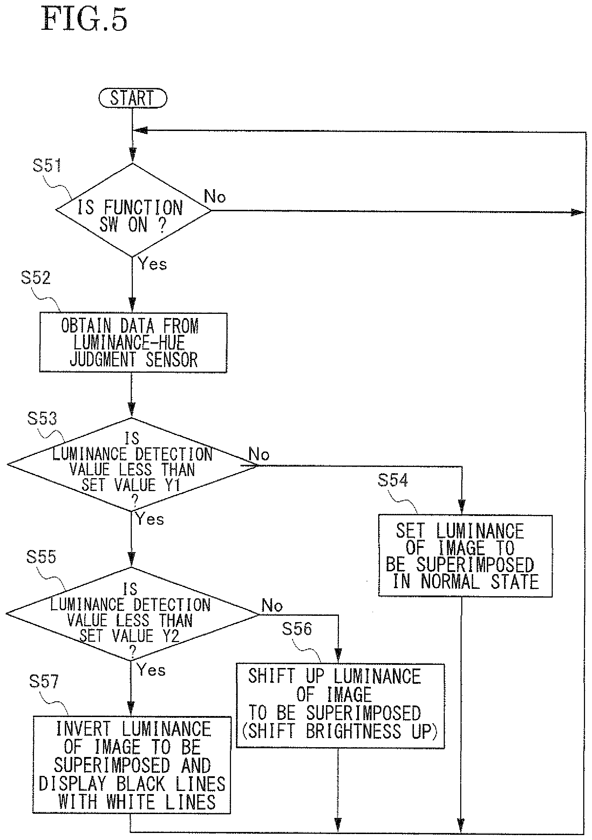

Fig. 5 is a flowchart showing a flow of an external image luminance follow-up display control processing (external image luminance follow-up display control mode) performed in the control circuit 45 in the see-through side-view monitor system A1 according to Embodiment 1. Hereinafter, each step in Fig.5 will be explained.

In step S51, it is judged whether or not the function switch 54 is ON. In the case of Yes (i.e., the switch 54 is ON), the process moves to step S52. In the case of No (i.e. the switch 54 is OFF), the process returns to the judgment in step S51.

In step S52, following the judgment that the function switch 54 is ON in step S51, luminance judgment data and hue judgment data are obtained as judgment data by the luminance-hue judgment sensor 49a and the process moves to step S53.

In step S53, following obtaining the luminance-hue judgment data in step S52, it is judged whether or not the judged luminance detection value is less than a first set value Y1 indicating a darkness threshold value. In the case of Yes (i.e., the luminance detection value < Y1), the process moves to step S55. In the case of No (i.e., the luminance detection value >= Y1), the process moves to step S54.

In step S54, following a judgment that the luminance detection value >= Y1 in step S53, the luminance of the vehicle interior image to be superimposed is set to be in a normal state, and the process returns to step S51.

Here, "luminance" means a measured light amount obtained by evaluating intensity of light emitting toward an observer from a light source or a secondary light source (a reflection surface or transmitting surface) with sensitivity of a human eye (CIE standard spectral luminous efficiency V[λ]), which is specified in a particular direction (observing direction). Moreover, "luminance in a normal state" means luminance with which the semitransparent vehicle interior image to be superimposed on the virtual camera image is clearly distinguished when brightness outside of the vehicle is brightness of the daytime.

In step S55, following a judgment that the luminance detection value < Y1 in step S53, it is judged whether or not the judged luminance detection value is less than a second set value Y2 (i.e., Y1 < Y2) indicating a nighttime threshold value. In the case of Yes (i.e., the luminance detection value < Y2), the process moves to step S57. In the case of No (i.e., the luminance detection value >= Y2), the process moves to step S56.

In step S56, following a judgment that the luminance detection value >= Y2 in step S55, the luminance of the vehicle interior image to be superimposed is shifted up or the brightness is increased, and the process returns to step S51. Here, "brightness" is one of three attributes of color and means lightness of color. The three attributes of color are "hue (color shade)" and "saturation" in addition to "brightness."

In step S57, following a judgment that the luminance detection value < Y2 in step S55, the luminance of the vehicle interior image to be superimposed is inverted to display black lines as white lines and the process returns to step S51.

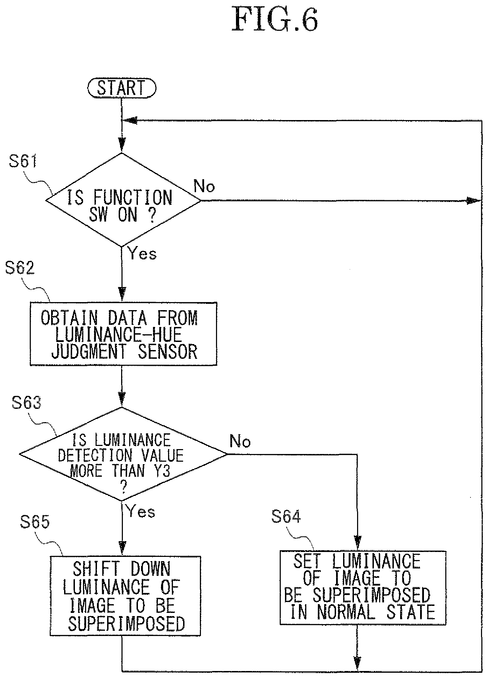

Fig. 6 is a flowchart showing a flow of a luminance abrupt change handling display control processing (luminance abrupt change handling display control mode) performed by the control circuit 45 in the see-through side-view monitor system A1 according to Embodiment 1. Hereinafter, each step in Fig.6 will be explained.

In step S61, it is judged whether or not the function switch 54 is ON. In the case of Yes (i.e., the switch 54 is ON), the process moves to step S62. In the case of No (i.e., the switch 54 is OFF), the process returns to the judgment in step S61.

In step S62, following a judgment that the function switch 54 is ON in step S61, luminance judgment result and hue judgment result are obtained as judgment data by the luminance-hue judgment sensor 49a and the process moves to step S63.

In step S63, following obtaining the luminance-hue judgment data in step S62, it is judged whether or not the judged luminance detection value is more than a third set value Y3 indicating an upper limit threshold value. In the case of Yes (i.e., the luminance detection value > Y3), the process moves to step S65. In case of No (i.e., the luminance detection value <= Y3), the process moves to step S64.

In step S64, following the judgment that the luminance detection value <= Y3 in step S63, the luminance of the vehicle interior image to be superimposed is set to be in the normal status, and the process returns to step S61.

In step S65, following the judgment that the luminance detection value > Y3 in step S63, the luminance of the vehicle interior image to be superimposed is shifted down or the brightness is decreased, and the process returns to step S61.

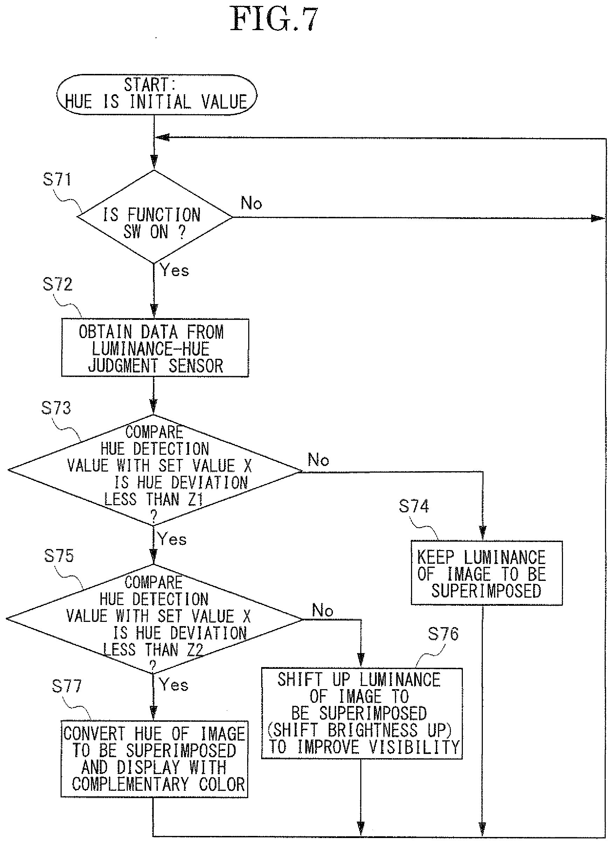

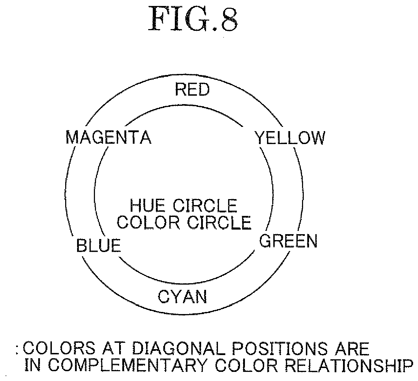

Fig. 7 is a flowchart showing a flow of a hue conversion display control processing (hue conversion display control mode) performed in the control circuit 45 in the see-through side-view monitor system A1 according to Embodiment 1. Fig. 8 is a view showing a hue circle used in the hue conversion display control processing in Embodiment 1. Hereinafter, each step in Fig. 7 will be explained.

In step S71, it is judged whether or not the function switch 54 is ON. In the case of Yes (i.e., the switch 54 is ON), the process moves to step S72. In the case of No (i.e., the switch 54 is OFF), the process returns to the judgment in step S71.

In step S72, following a judgment that the function switch 54 is ON in step S71, luminance judgment result and hue judgment result are obtained as judgment data by the luminance-hue judgment sensor 49a and the process moves to step S73.

In step S73, following obtaining the luminance-hue judgment data in step S72, the judged hue detection value is compared with a hue set value X and it is judged whether or not a hue deviation due to a difference therebetween is less than a first threshold value Z1. In the case of Yes (i.e., the hue deviation < Z1), the process moves to step S75. In the case of No (i.e., the hue deviation >= Z1), the process moves to step S74.

Here, the hue set value X is obtained by judging a hue of the vehicle interior image before performing hue conversion, which is set and stored in the image memory 44.

In step S74, following a judgment that the hue deviation >= Z1 in step S73, the hue of the vehicle interior image to be superimposed is kept and the process returns to step S71.

In step S75, following a judgment that the hue deviation < Z1 in step S73, the judged hue detection value is compared with the hue set value X and it is judged whether or not the hue deviation due to the difference therebetween is less than a second threshold value Z2 (i.e., Z2 < Z1). In case of Yes (i.e., the hue deviation < Z2), the process moves to step S77. In the case of No (i.e., the hue deviation >= Z2), the process moves to step S76.

In step S76, following a judgment that the hue deviation >= Z2 in step S75, the luminance of the vehicle interior image to be superimposed is shifted up or the brightness is increased and the process returns to step S51.

In step S77, following a judgment that the hue deviation < Z2 in step S75, the hue of the vehicle interior image to be superimposed is converted into a hue of a complementary color and the process returns to step S71.

Here, in the conversion into a hue of a complementary color, the colors at diagonal positions in the hue circle shown in Fig. 8 are in a complementary color relationship. For example, when the hue of the external image is red, the hue is preferably converted into "cyan" the most. However, a complementary color area at a diagonal position with respect to "red" has "blue" and "green" other than "cyan" and therefore red may be converted into "blue" or "green."

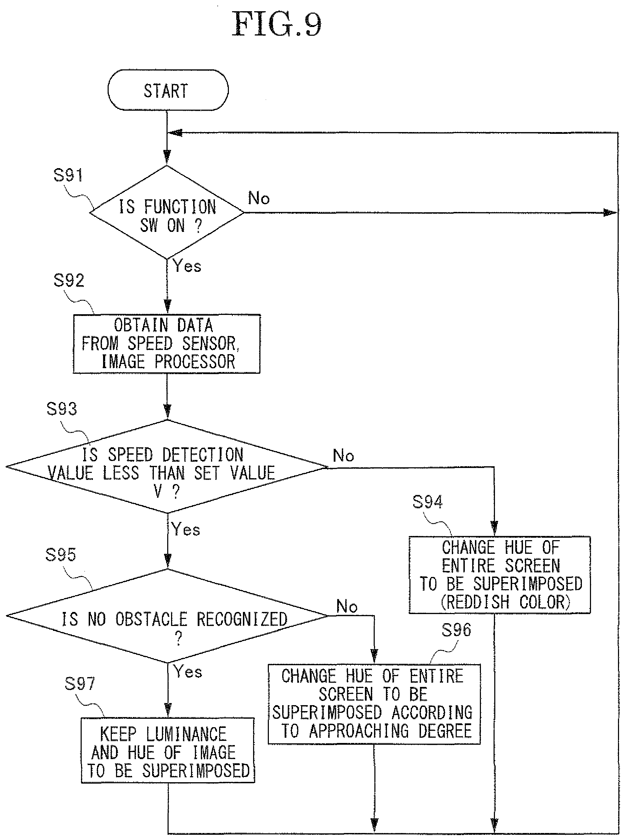

Fig. 9 is a flowchart showing a flow of an alarm display control processing (alarm display control mode) performed in the control circuit 45 in the see-through side-view monitor system A1 according to Embodiment 1. Hereinafter, each step in Fig.9 will be explained.

In step S91, it is judged whether or not the function switch 54 is ON. In the case of Yes (i.e., the switch 54 is ON), the process moves to step S92. In the case of No (i.e., the switch 54 is OFF), the process returns to the judgment in step S91.

In step S92, following a judgment that the function switch 54 is ON in step S91, speed data is obtained by the speed sensor 52 and obstacle existence-non existence data is obtained from the image processor 43, and then the process moves to step S93.

Here, the "obstacle existence-non existence data" is obtained by analyzing the real camera image data input to the image processor 43 and judging whether or not an image indicating an obstacle exists in the analyzed image.

In step S93, following obtaining the speed data and the obstacle existence-non existence data, it is judged whether or not the speed detection value is less than a set value V. In the case of Yes (i.e., the speed detection value < 0), the process moves to step S95. In the case of No (i.e., the speed detection value >= V), the process moves to step S94.

Here, since the side-view monitor system is originally used for confirming safe conditions when moving in a width direction or starting, the set value V is set as a judging threshold of a low speed driving and a normal driving and set to a low speed value.

In step S94, following a judgment that the speed detection value >= V in step S93, a hue of the entire screen of the vehicle interior image to be superimposed is changed to be reddish providing an alarm with the entire screen and the process returns to step S51.

In step S95, following a judgment that the speed detection value < V in step S93, it is judged whether or not an obstacle is not recognized by the obtained obstacle existence-non existence data. In the case of Yes (i.e., the obstacle is not recognized), the process moves to step S97. In the case of No (i.e., the obstacle is recognized), the process moves to step S96.

In step S96, following a judgment that the obstacle is recognized in step S95, the hue of the entire screen of the vehicle interior image to be superimposed is changed according to an approaching degree to the obstacle (for example, from orange gradually to red) and the process returns to step S91.

In step S97, following a judgment that the obstacle is not recognized in step S95, the luminance and hue of the vehicle interior image to be superimposed is kept and the process returns to step S91.

### Next, operation will be explained.

An object of the present invention including Embodiment 1 to Embodiment 3 is to propose a vehicle peripheral image display system with low cost, which has an external camera capable of contributing to blind spot elimination and is capable of displaying a camera image by using an image processing and with which the driver can intuitively recognize the image to be viewed through the vehicle only by viewing the image and understand vehicle behavior in the image.

Then, the display system proposed by the inventors of the present application is mainly as follows:
- Constructing a display method with which only by viewing an image displayed on a monitor, sense for the vehicle such as a moving direction, size and the like of the vehicle can be intuitively understood.
- Providing a system capable of changing transmissivity of the image and the like depending on the driver's preference.
- Constructing a display system capable of automatically changing a basic transmissivity depending on a driving situation. For example, transmissivity is changed depending on the luminance of the external image when it is getting dark to make it easy to see the external image.
- Constructing a display system performing an automatic control of a luminance and a hue of the vehicle interior image to be superimposed to enhance visibility according to a luminance and a hue of the external image. In addition, the system is capable of changing the luminance and hue by a manual operation according to preference of visibility, which varies largely among different individuals. Various attempts are made so as to easily view the camera image after the viewpoint conversion is performed, for example, the luminance of the semitransparent vehicle interior image is increased when it is getting dark, the luminance of the semitransparent vehicle interior image is inverted at nighttime, the luminance of the semitransparent vehicle interior image is decreased when light of an oncoming vehicle enters the camera, the hue of the semitransparent vehicle interior image is converted to have a hue deviation when hues of the external image and the semitransparent vehicle image are close to each other, and the like.
- Providing a system performing an alarm operation visually indicating an alarm using an entire screen displayed on a monitor by taking advantage of the controllable hue. For example, in conjunction with the speed information or the obstacle information, in case of less security, the hue of the entire semitransparent vehicle interior image is converted into the reddish hue, or the like to indicate an alarm.

Hereinafter, operations in the see-through side-view monitor system A1 according to Embodiment 1 will be explained by dividing into a "monitor image display operation with a transmitting image," a "semitransparent part transmissivity changing operation," an "external image luminance follow up display control operation," a "luminance abrupt change handling display control operation," "hue conversion display control operation," and an "alarm display control operation."

### [Monitor Image Display Operation with a Transmitting Image]

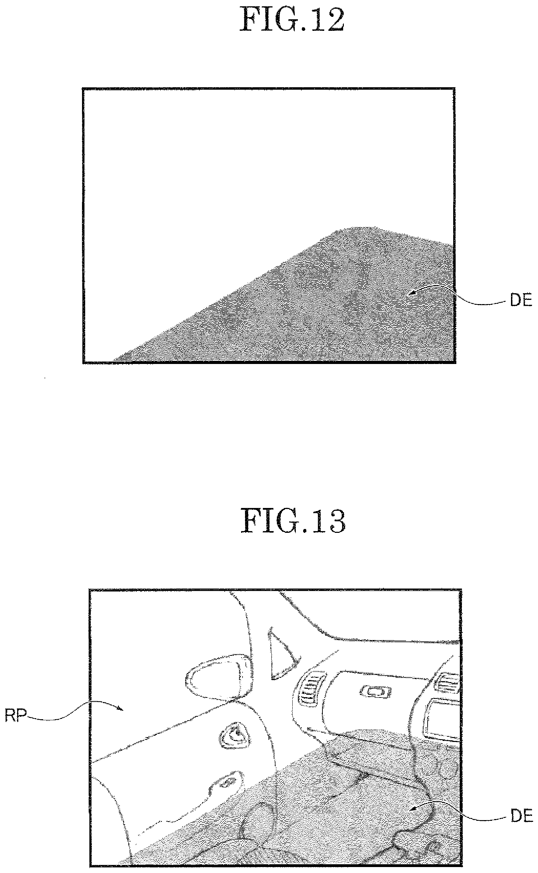

Fig. 10 is a view showing a vehicle interior still image previously photographed toward a side portion of a front part from a position of the driver's viewpoint. Fig. 11 is a perspective view showing an image of a state where a vehicle shape is projected onto a road surface from the vehicle on which the see-through side-view monitor system A1 according to Embodiment 1 is installed. Fig. 12 is a view showing an image (opaque part) which is obtained by projecting the vehicle shape on the road surface from the vehicle on which the see-through side-view monitor system A1 according to Embodiment 1 and is viewed through from a position of the driver's viewpoint. Fig. 13 is a view showing an image where the "opaque part DE" of Fig. 12 is set on the vehicle interior image RP shown in Fig. 10 in the see-through side-view monitor system A1 according to Embodiment 1. Fig. 14 is a view showing a semitransparent vehicle interior image RG where the "opaque part DE," a "transparent part CE," and a "semitransparent part GE" are set on the vehicle interior image RP shown in Fig. 10 in the see-through side-view monitor system A1 according to Embodiment 1. Hereinafter, a monitor image display operation with a transmitting image will be explained.

An analog-digital conversion on a real camera image input from the side camera 1 is performed by the decoder 41 and stored in the image memory 42. Then, in the image processor 43, "image processings including various processings (luminance adjustment, color correction, edge correction, and the like)" and a "viewpoint conversion processing as if the virtual camera is disposed at the vicinity of the driver's viewpoint" are performed to obtain the virtual camera image.

On the other hand, the image memory 44 stores the vehicle interior image RP (Fig.10) which is previously photographed as the vehicle interior image.

Then, the superimposing circuit 46 generates a semitransparent image of the vehicle interior image RP from the image memory 44 to generate a semitransparent vehicle interior image RG (Fig. 14) and performs an image composition superimposing the semitransparent vehicle interior image RG on the virtual camera image from the image processor 43 to generate a composite image expressing the virtual camera image through the semitransparent vehicle interior image RG.

The composite image obtained by superimposing in the superimposing circuit 46 is sent to the encoder 47 and processed via the digital/analog conversion in the encoder 47 and output to the monitor 3 to be displayed on the display screen 3a.

Hereinafter, a way to generate the semitransparent vehicle interior image RG from the vehicle interior image RP as shown in Fig.10 will be explained.

First, although, in Fig. 11, the vehicle is illustrated at a high position in an air for the sake of easy understanding, in fact, the projected surface is vertically projected on the road surface and the projected image is positioned at the same height position as that of a tire contact surface. The image shown in Fig. 12 indicates a vehicle body shape itself while actually driving. Therefore if it is superimposed on the image from the driver's viewpoint, contacting the projected image means contacting the vehicle body. In other words, when the image obtained by performing viewpoint conversion is displayed by being superimposed on the projected surface, only by viewing the image (side-view screen), senses for the vehicle required when preventing wheels from falling into a side ditch or avoiding obstacles can be understood at one view and intuitively understood so that the system can have a larger contribution to a safe driving. That is, as shown in FIG. 13, a part where the vehicle body shape is projected is set as an "opaque part DE" with transmissivity of 0% and the vehicle interior image RP is directly displayed.

On the other hand, with respect to a part which is not overlapped with the projected image of the vehicle body, by using an α blend with the side camera image, the vehicle interior image RP is displayed at arbitrary transmissivities. More specifically, as shown in Fig. 14, a window glass part is set as a "transparent part CE" with transmissivity of 100 %, the other part is set as a "semitransparent part GE" and further an "opaque part DE" with transmissivity of 0 % is added. Thereby, the vehicle interior image RP from the driver's viewpoint can be displayed as the semitransparent vehicle interior image RG at 100 %.

If the actually-implemented semitransparent vehicle interior image RG is confirmed, a floor part where the vehicle interior image RP is directly used is clearly distinguished from a door part where transmissivity is 10 to 50 % so that the vehicle shape can be easily distinguished. In addition, if a virtual camera image is superimposed on the actually-implemented semitransparent vehicle interior image RG, it is easily understood that the side camera image, which is obtained after the viewpoint conversion (= virtual camera image), is to be viewed through the door by using the superimposing method with the vehicle interior image.

As mentioned above, by the viewpoint conversion processing, the real camera image of the side camera installed in the side mirror is converted into the virtual camera image as if it is photographed by the virtual camera from the position of the driver's viewpoint and the semitransparent vehicle interior image is superimposed on the virtual camera image and displayed so that the transmitting image having more sense of reality can be expressed. Furthermore, by displaying shades, which are obtained by vertically projecting the actual size and shape of the vehicle on the road surface, positional relationship between the actual vehicle and the external transmitting image can be displayed and clearly understood.

Moreover, within the vehicle interior image RP, which is viewed from the position of the driver's viewpoint, an area of the shades which are projected according to the size and shape of the vehicle body on a road surface, which is a virtual space screen in case where the above viewpoint conversion is performed, is displayed as the "opaque part DE" with transmissivity of 0 %, and the other area is displayed as the semitransparent parts ("transparent part GE," "semitransparent part GE") with arbitrary transmissivities. Accordingly, the superimposed screen where the size and shape of the vehicle body are clear is displayed on the monitor screen 3a and the other part is a blend screen with the camera image. As a result, a vehicle behavior can be clearly understood at one view and it is easy to judge a possibility of wheels coming off, and the like.

In the conventional system, provision of not only an external back camera, but also an inside camera are necessary. Considering the high cost of the conventional system, substantial effects are hardly expected and the system has a wasteful configuration.

That is, in the conventional system two cameras: the blind spot camera and the driver's viewpoint camera, which is required in addition to the existing system, are used and therefore cost becomes increased. Furthermore, the driver's viewpoint camera is provided at a vicinity of the driver's viewpoint but not at a position of the driver's viewpoint. Therefore, there is disparity in the camera image which is obtained by the driver's viewpoint camera with respect to the image which is actually viewed from the driver's viewpoint.

To the contrary, in this proposal, it is not necessary to add a driver's viewpoint camera to the existing system to avoid increased cost. Furthermore, with respect to the vehicle interior image, by using a vehicle interior image RP previously photographed from the driver's viewpoint which is a viewpoint of a virtual camera, there is no disparity with respect to the image actually viewed from the driver's viewpoint as there is in case where the driver's viewpoint camera is used. As a result, the vehicle body shape can be understood at one view so that necessary and sufficient effect can be obtained, where it is very easy to understand when getting around obstacles that are approaching or in a moving direction to contribute to safe driving.

### [Semitransparent part Transmissivity Change Operation]

As mentioned above, in the blending circuit 46a of the superimposing circuit 46, within the vehicle interior image PR, an area SE where the shape of the vehicle is projected on the road surface is set as the "opaque part DE" with transmissivity of 0 % of the vehicle interior image, an area corresponding to a window glass of the vehicle is set as the "transparent part CE" with transmissivity of 100 %, and an area other than the shade area and the window glass area is set as the "semitransparent part GE" (see FIG. 14).

As described above, instead of using an image which is an entirely uniformly semitransparent, by using a blend setting of images having several levels of transmissivities where semitransparent parts are capable of being blended at transmissivity of 100 % and transmissivity in a range of 100 % to 0 % and an image having several levels of transmissivities, it is possible to improve various erroneous understandings or recognitions caused from a uniform screen.

However, with respect to the "semitransparent part GE," if previously determined uniform transmissivity is used, user cannot arbitrarily change the transmissivity so usability is degraded. Moreover, since the screen has uniform transmissivity even in case where surrounding environment changes, visibility may be degraded.

To the contrary, in Embodiment 1, transmissivity of the "semitransparent part GE" is adjustable by a manual operation or is automatically adjustable.
That is, when a transmissivity adjustment signal is input to the blending external controller 48 by a manual operation to the blending ratio manual control interface 4, a transmissivity control command is output to the control circuit 45 and the blending circuit 46a arbitrarily adjusts the transmissivity of the "semitransparent part GE" set in the vehicle interior image within a range of 0 % to 100 %.

Furthermore, if the function switch 54 is kept ON, the blending circuit 46a automatically adjusts the transmissivity of the "semitransparent part GE" set in the vehicle interior image based on surrounding environment information (daytime, time when it is getting dark, nighttime, weather, and the like) and vehicle information (rudder angle, vehicle speed) obtained by the external sensor 5 so as to enhance visibility of the composite image displayed on the monitor 3.

Accordingly, by the blending ratio which is changeable by a manual operation, the system is capable of freely setting and updating the transmissivity of the "semitransparent part GE" so that high usability is achieved. Furthermore, if the function switch 54 is kept ON, the system automatically adjusts the transmissivity of the "semitransparent part GE" without user's operation and it is possible to maintain high visibility of the composite image displayed on the monitor 3.

### [External Image Luminance Follow Up Display Control Operation]

Fig. 15 is an image view showing an inverted luminance screen when the semitransparent vehicle interior image RG is inverted and displayed in the see-through side-view monitor system A1 according to Embodiment 1. Hereinafter, a display control operation in an external image luminance follow up display control mode with reference to Fig. 15 based on the flowchart shown in Fig. 5.

When an external image captured by the side camera 1 at daytime, or the like is bright, and the luminance detection value is the first set value Y1 or more, in the flowchart of Fig. 5, a flow from step S51 to step S52, step S53 and step S54 is repeated. That is, in step S54, the lamination of the semitransparent vehicle interior image RG to be superimposed is set as a luminance in a normal state where high visibility is provided when the external image is bright.

When the external image captured by the side camera 1 when it is getting dark or under a cloudy weather is dark and the luminance detection value is less than the first set value Y1 and the second set value Y2 or more, in the flowchart of Fig. 5, a flow from step S51 to step S52, step S53, step S55 and step S56 is repeated. That is, in step S56, the luminance or brightness of the semitransparent vehicle interior image RG to be superimposed is shifted up.

For example, when it is getting dark, if the luminance (brightness) of the semitransparent vehicle interior image RG to be superimposed is kept in the normal state, the entire luminance of the display screen 3a of the monitor 3 is decreased and the semitransparent vehicle interior image RG is blended into the dark virtual camera image so that visibility may be degraded.

To the contrary, by enhancing the luminance (brightness) of the semitransparent vehicle interior image RG to be superimposed with respect to the dark external image, the two images to be superimposed to each other have difference in luminance (brightness) so that visibility is improved.

When the external image captured by the side camera 1 at nighttime or the like is dark and the luminance detection value is less than the second set value Y2, in flowchart of Fig. 5, a flow from step S51 to step S52, step S53, step S55 and step S57 is repeated. That is, in step S57, as shown in Fig. 15, the luminance of the semitransparent vehicle interior image RG to be superimposed is inverted to display black lines with white lines.

For example, at nighttime where the external image is dark, if the luminance (brightness) of the semitransparent vehicle interior image RG to be superimposed is kept in the normal state, the entire luminance of the display screen 3a of the monitor 3 is largely decreased and the semitransparent vehicle interior image RG is completely blended into the dark virtual camera image so that visibility is remarkably degraded. Furthermore, even though the luminance of the semitransparent vehicle interior image RG to be superimposed is shifted up, the semitransparent vehicle interior image is blended into and not distinguished from the dark virtual camera image.

To the contrary, by inverting the luminance data of the semitransparent vehicle interior image RG to be superimposed onto the dark external image as a negative photograph image and displaying black line parts with white lines and white line parts with black lines, it is possible to form the composite image having enhanced visibility - especially at nighttime. That is, by inverting and displaying the semitransparent vehicle interior image RG, the display screen of the monitor 3 by superimposing displays a line picture in a white image so that sense for vehicle can be intuitively understood even in the dark external camera image.

In addition, since there are large differences in preference of images between individuals, it is required to provide an operation for changing luminance according to the preference. With respect to this, for the luminance adjustment by a manual operation, the luminance can be shifted up by increasing the transmissivity and can be shifted down by decreasing the transmissivity by the blending ratio manual control interface 4.

### [Luminance Abrupt Change Handling Display Control Operation]

Hereinafter, a display control operation in a luminance abrupt change handling display control mode will be explained based on the flowchart shown in Fig. 6.

When there is no abrupt change of the luminance and the luminance detection value is the third set value Y3 or less, in the flow chart of Fig. 6, a flow from step S61 to step S62, step S63, and step S64 is repeated. That is, in step S64, the luminance of the semitransparent vehicle interior image RG to be superimposed is in the normal state or in a luminance changed state by the above external image luminance follow up display control.

On the other hand, if there is an abrupt luminance change, for example, light of an oncoming vehicle enters the side camera 1 at nighttime, or the like and the luminance detection value is more than the third set value Y3, in the flowchart of Fig. 6, a flow from step S61 to step S62, step S63, and step S65 is repeated. That is, in step S65, the luminance or the brightness of the semitransparent vehicle interior image RG to be superimposed is shifted down.

For example, when moving in a width direction and there is an abrupt luminance change due to the light of the oncoming vehicle or the like, although the luminance of the external image on the monitor 3 can be corrected at a certain degree, basically the image whites out and the superimposed semitransparent vehicle interior image cannot be distinguished.

With respect to non-abrupt luminance change, a dazzlement prevention effect can be achieved at a certain degree by a luminance adjustment including an auto iris provided in the on-vehicle camera and the image to be superimposed can be distinguished. However, in case where there is an abrupt luminance change, it cannot be sufficiently achieved by the luminance adjustment function of the on-vehicle camera.

To the contrary, in Embodiment 1, when there is an abrupt luminance change, for example, due to light of an oncoming vehicle entering the side camera 1, or the like and thereby the luminance detection value is more than the third set value Y3, the luminance or the brightness of the semitransparent vehicle interior image RG to be superimposed is shifted down. Thereby, even though the external image (virtual camera image) displayed on the display screen 3a of the monitor 3 becomes whitish, since the semitransparent vehicle interior image RG which is blackish at a whole is superimposed, the semitransparent vehicle interior image RG can be clearly distinguished from the external image and visibility when there is an abrupt luminance change can be effectively improved.

### [Hue Conversion Display Control Operation]

Hereinafter, a display control operation in a hue conversion display control mode will be explained based on the flowchart shown in Fig. 7 with reference to Fig. 8.

When the hue of the external image is different from that of the semitransparent vehicle interior image RG and the hue deviation obtained when the hue detection value is compared with the set value X is the first threshold value Z1 or more, in the flowchart of Fig. 7, a flow from step S71 to step S72, step S73 and step S74 is repeated. That is, in step S74, the hue of the semitransparent vehicle interior image RG to be superimposed is kept without change.

When the hue of the external image becomes close to that of the semitransparent vehicle interior image RG and the hue deviation obtained when the hue detection value is compared with the set value X is less than the first threshold value Z1 and the second threshold value Z2 or more, in the flowchart of Fig. 7, a flow from step S71 to step S72, step S73, step S75 and step S76 is repeated. That is, in step S76, the luminance or the brightness of the semitransparent vehicle interior image RG to be superimposed is increased.

When the hue of the external image is close to that of the semitransparent vehicle interior image RG and the hue deviation obtained when the hue detection value is compared with the set value X is less than the second threshold value Z2, in the flowchart of Fig. 7, a flow from step S71 to step S72, step S73, step S75 and step S77 is repeated. That is, in step S77, the hue of the semitransparent vehicle interior image RG to be superimposed is converted into the complementary hue which is positioned in a diagonal position in the hue circle shown in Fig. 8 to be displayed.

For example, even in case where the hues have the same blown color, if the brightness of the color is different, light brown can be distinguished from dark brown. Then, if the hues have a small difference, the distinguishability can be improved by differentiating the brightness of color. Therefore, in case where the hue of the external image and the hue of the semitransparent vehicle interior image RG have hue levels similar to but different from each other, the visibility can be improved by increasing the luminance (brightness) of the semitransparent vehicle interior image RG to be superimposed.

For example, if it is outside during the season of new green leaves, the main color is greenish color. If the semitransparent vehicle interior image RG to be superimposed has mainly the similar greenish color, the visibility becomes degraded. In this case, if the semitransparent vehicle interior image RG has "a color in magenta which exists at an opposite side in the hue circle," it can be distinguished. Furthermore, if it is outside during sunset, the main color is reddish color. If the semitransparent vehicle interior image RG to be superimposed has mainly the similar reddish color, the visibility becomes degraded. In this case, if the semitransparent vehicle interior image RG has "a color in cyan which exists at an opposite side in the hue circle," it can be distinguished.

Therefore, in case where the hue of the external image and the hue of the semitransparent vehicle interior image RG have the same hue levels each other, by changing the hue to the color in the complementary color relationship, a monitor image where the external image is clearly distinguished from the semitransparent vehicle interior image RG can be provided.

### [Alarm Display Control Operation]

Hereinafter, a display control operation in an alarm display control mode based on the flowchart shown in Fig. 9.

When the side-view monitor display is maintained even in a normal driving state and the speed detection value is the set value V or more, in the flowchart of Fig. 9, a flow from step S91 to step S92, step S93 and step S94 is repeated. That is, in step S94, the hue of the entire screen of the semitransparent vehicle interior image RG is converted into a reddish hue.

Furthermore, when an obstacle is recognized around the vehicle, in the flowchart of Fig. 9, a flow from step S91 to step S92, step S93, step S95 and step S97 is repeated. That is, in step S96, the hue of the entire screen of the semitransparent vehicle interior image RG to be superimposed is converted so as to gradually strengthen red color according to closeness to the obstacle.

On the other hand, if there is no vehicle speed condition and obstacle condition, in the flowchart of Fig.9, a flow from step S91, step S92, step S93, step S95 and step S97 is repeated. That is, in step S97, the luminance and the hue of the semitransparent vehicle interior image RG to be superimposed is maintained.

The side-view monitor system is used for confirming safe conditions when moving in a width direction and starting an engine, and the like, and therefore is frequently used when the vehicle stops or runs at a very low speed. Therefore, in case where the system it to be used when the vehicle runs faster than at a certain speed, the monitor 3 is continuously viewed and therefore sense for speed or sense for understanding a space is emphasized more than in an actual situation, so that uncomfortable feeling is often caused. This make the safety degraded in its original intention and therefore, such a situation is preferably judged to indicate an alarm for decreasing speed for a safe driving. Moreover, in case where recognition of an obstacle is performed by image analysis in the image processing control unit 2, it is preferable to indicate an alarm for notifying an existence of an obstacle to enhance driving for getting around the obstacle when the obstacle is recognized.

With respect to this, focusing on the hue control capability on the entire semitransparent vehicle interior image RG to be superimposed, an alarm operation is performed in conjunction with the speed sensor 52 or the like. That is, an excessive speed condition is judged to change the entire hue of the semitransparent vehicle interior image RG to be superimposed into reddish color so that an alarm to decrease the vehicle speed is provided to the driver to ensure the safety. Furthermore, if an obstacle is recognized, an alarm display using a hue change according to the closeness to the obstacle is performed to promote handling collision, inclusion, wheels falling down, and the like at an early stage to ensure the safety.

### Next, effects will be explained.

According to the see-through side-view monitor system A1 of Embodiment 1, the following effects can be obtained:
(1) In a vehicle peripheral image display system (see-through side-view monitor system A1) including an on-vehicle blind spot camera (side camera 1) provided on a vehicle and imaging a peripheral of the vehicle, a monitor 3 set at a position in a vehicle interior for a driver to visually confirm the monitor, and a monitor image generating means (image processing control unit 2) generating a display image to be displayed on the monitor 3 based on a real camera image input from the on-vehicle blind spot camera(side camera 1), the monitor image generating means (image processing control unit 2) includes an image processor 43 performing a viewpoint conversion of the real camera image input from the on-vehicle blind spot camera (side camera 1) into a virtual camera image to be viewed from a position of a driver's viewpoint, an external image color judging section (luminance-hue judgment sensor 49a) judging a color of an external image from the on-vehicle blind spot camera (side camera 1) based on at least one of luminance, hue, saturation and brightness, a vehicle interior image color automatically adjusting section (luminance-hue conversion block 49b) automatically adjusting at least one of luminance, hue, saturation and brightness of a semitransparent vehicle interior image RG which is a semitransparent image of a vehicle interior image based on the color judgment result of the external image so as to enhance visibility for the external image, and an image component composite circuit (superimposing circuit 46) performing an image composition superimposing the semitransparent vehicle interior image RG from the vehicle interior image color automatically adjusting section (luminance-hue conversion block 49b) on the virtual camera image from the image processor to generate a composite image expressing the virtual camera image to be viewed through the semitransparent vehicle interior image RG.
   Accordingly, regardless of a surrounding environmental condition where a real camera image is obtained, the virtual camera image is clearly distinguished from the semitransparent vehicle interior image RG and the external situation which is in a blind spot from the driver can be transmitted and clearly visually confirmed with a positional relationship with the vehicle.
(2) The monitor image generating means (image processing control unit 2) has an image storage section (image memory 44) storing a vehicle interior still image which is previously photographed from the driver's viewpoint as the vehicle interior image, and the vehicle interior image color automatically adjusting section (luminance-hue conversion block 49b) generates a semitransparent image of the vehicle interior image from the image storage section (image memory 44) to obtain the semitransparent vehicle interior image RG.
   Accordingly, without setting a driver's viewpoint camera, a low cost system which only uses an on-vehicle blind spot camera (side camera 1) is provided while the semitransparent vehicle interior image RG to be viewed from the driver's viewpoint can be obtained without causing disparity with respect to an actual driver's viewpoint, which is caused by the driver's viewpoint camera.
(3) The external image color judging section is a luminance-hue judgment sensor 49a judging average luminance and hue of the external image from the on-vehicle blind spot camera (side camera 1) and the vehicle interior image color automatically adjusting section is a luminance-hue conversion block 49b which automatically adjusts the luminance and hue of the semitransparent vehicle interior image RG based on a color judgment result of the external image by the luminance-hue judgment sensor 49a so as to enhance visibility with respect to the luminance and hue of the external image.
   Accordingly, the luminance and the hue of the semitransparent vehicle interior image RG can be automatically adjusted so as to enhance the visibility according to the average luminance and hue of the external image from the on-vehicle blind spot camera (side camera 1).
   The monitor image generating means (image processing control unit 2) has an external image luminance follow-up display control mode (see Fig. 5) in which a luminance detection value from the luminance-hue judgment sensor 49a is loaded, a display where the luminance of the semitransparent vehicle interior image RG is differentiated from that of the external image is displayed when the luminance detection value is a first set value Y1 indicating a dark threshold value or more, a display where the luminance of the semitransparent vehicle interior image RG is increased to be differentiated from the luminance of the external image is displayed when the luminance detection value is less than the first set value Y1 and a second set value Y2 indicating a night threshold value or more, and a display where the luminance of the semitransparent vehicle interior image RG is inverted and black lines are displayed by white lines is displayed when the luminance detection value is less than the second set value Y2.
   Accordingly, following the luminance change of the external image from daytime to nighttime via time when it is getting dark, the external image displayed on the monitor 3 is clearly distinguished from the semitransparent vehicle interior image RG so that the visibility can be improved.
(5) The monitor image generating means (image processing control unit 2) has a luminance abrupt change handling display control mode (see Fig. 6) in which a luminance detection value from the luminance-hue judgment sensor 49a is loaded, a display where the luminance of the semitransparent vehicle interior image RG is decreased to be entirely blackish is displayed when the luminance detection value is more than a third set value Y3 indicating an upper limit threshold value.
   Accordingly, when there is an abrupt luminance change occurring when light of an oncoming vehicle entering the on-vehicle blind spot camera (side camera 1) at nighttime, while handling the abrupt luminance change, the external image displayed on the monitor 3 is clearly distinguished from the semitransparent vehicle interior image RG so that visibility can be improved.
(6) The monitor image generating means (image processing control unit 2) has a hue conversion display control mode (see Fig.7) in which a hue detection value from the luminance-hue judgment sensor 49a is loaded, a display where the hue of the semitransparent vehicle interior image RG is kept is displayed when a hue deviation between the hue detection value and a set value X is a first threshold value Z1 or more, a display where the hue of the semitransparent vehicle interior image RG is kept and color is brighter is displayed when the hue deviation between the hue detection value and the set value X is less than the first threshold value Z1 and a second threshold value Z2 or more, vehicle interior image RG is converted into a hue of a complementary color which is in a complementary color area in a hue circle with respect to the hue of the external image to be displayed when the hue deviation between the hue detection value and the set value X is less than the second threshold value Z2.
   Accordingly, even if the hue of the external image becomes close to or is matched with the hue of the semitransparent vehicle interior image RG, while handling hue deviations widths therebetween, the external image displayed on the monitor 3 is clearly distinguished from the semitransparent vehicle interior image RG so that visibility can be improved.
(7) A vehicle speed detecting means (speed sensor 52) detecting a vehicle speed is provided, and the monitor image generating means (image processing control unit 2) has an alarm display control mode (Fig. 9) in which a vehicle speed detection value from the vehicle speed detecting means (speed sensor 52) is loaded, and a hue of the entire semitransparent vehicle interior image RG is converted into a hue to make the driver recognize an alarm and is displayed when the vehicle detection value is a set value V or more.
   Accordingly, in case of an excessive vehicle speed, by changing the entire hue of the semitransparent vehicle interior image RG to be superimposed into, for example reddish color, an alarm to decrease a vehicle speed is provided to the driver to ensure the safety.
(8) The monitor image generating means (image processing control unit 2) has a vehicle interior image color external controller (hue external controller 49c) arbitrarily adjusting at least one of the luminance, hue, saturation and brightness of the semitransparent vehicle interior image RG in accordance with an operation to a vehicle interior image color manual operation means (hue manual control interface 6) from outside.
   Accordingly, according to user's preference which varies between individuals or visibility of the display image of the monitor 3, at least one of the luminance, hue, saturation and brightness of the semitransparent vehicle interior image RG can be adjusted by a manual operation so that the system having high usability is provided.
(9) The image composite circuit (superimposing circuit 46) has a blending circuit section 46a setting, within the vehicle interior image to be viewed from the driver's viewpoint, an area SE where the vehicle is projected on a road surface as an opaque part DE with transmissivity of the vehicle interior image RP which is 0 %, an area corresponding to a window glass of the vehicle as a transparent part CE with transmissivity of the vehicle interior image RP which is 100 %, an area other than the opaque part DE and the transparent part CE as a semitransparent part GE with an arbitrary transmissivity.
   Accordingly, a superimposed screen where a vehicle size and shape are clear is displayed on the monitor 3 and for example, it is possible to improve various misunderstanding and erroneous recognition occurring when a uniform semitransparent vehicle interior image is used. As a result, the vehicle behavior can be recognized at one view so that a judgment to avoid wheel falling into a side ditch can be easily performed.
(10) The on-vehicle blind spot camera is a side camera 1 used in a see-through side-view monitor system A1 displaying a side portion of a front part from the vehicle which is in a blind spot from the driver as an image to be viewed through from the vehicle interior on the monitor 3 in the vehicle interior.

Accordingly, sense for a vehicle required when avoiding wheel falling into a side ditch or getting around an obstacle can be recognized at one view so that a space can be intuitively understood and large contribution to the safe driving can be obtained.

### EMBODIMENT 2

Embodiment 2, using a blind spot eliminating back camera disposed at a back position of a vehicle as an on-vehicle blind spot camera, is an example of a see-through back-view monitor system where a back portion of the vehicle which is in a blind spot from the driver, is displayed on a monitor as an image to be viewed through from a vehicle interior.

### First, configuration will be explained.

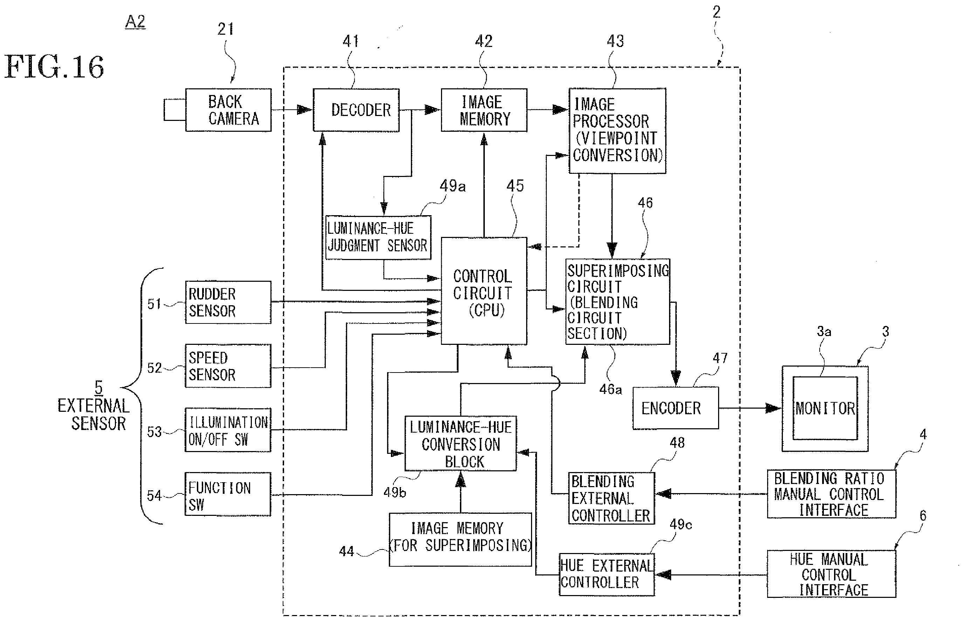

Fig. 16 is an entire system block diagram showing the see-through back-view monitor system A2 (an example of a vehicle peripheral image display system) according to Embodiment 2.

The see-through back-view monitor system A2 according to Embodiment 2 includes, as shown in Fig. 16, a back camera 21 (on-vehicle blind spot camera), an image processing control unit 2 (monitor image generating means), a monitor 3, a blending ratio manual control interface 4 (blending ratio manual operation means), an external sensor 5, and a hue manual control interface 6 (vehicle interior image color manual operation means).

The side camera 21 is disposed at a vicinity of an inner side of a trunk lid of a license plate in case of a passenger car or at a vicinity of an upper end of a rear window in case of a large car such as a recreational vehicle and images a rear part of the vehicle, which is in a blind spot from the driver. The back camera 21 obtains a real camera image data of the back part of the vehicle by an image pickup device (a CCD, a CMOS, or the like).

The image processing control unit 2 includes, as shown in Fig. 16, a decoder 41, an image memory 42, an image processor 43, an image memory 44 (image storage section), a control circuit (CPU) 45, a superimposing circuit 46 (image composite circuit), an encoder 47, a blending external controller 48, a luminance-hue judgment sensor 49a (external image color judging section), a luminance-hue conversion block 49b (vehicle interior image color automatic adjusting section), and a hue external controller 49c (vehicle interior image color external controller). Moreover, since each configuration is the same as that in Embodiment 1, the same numerical reference is used and the detailed explanation is omitted.

### Next, operation will be explained.

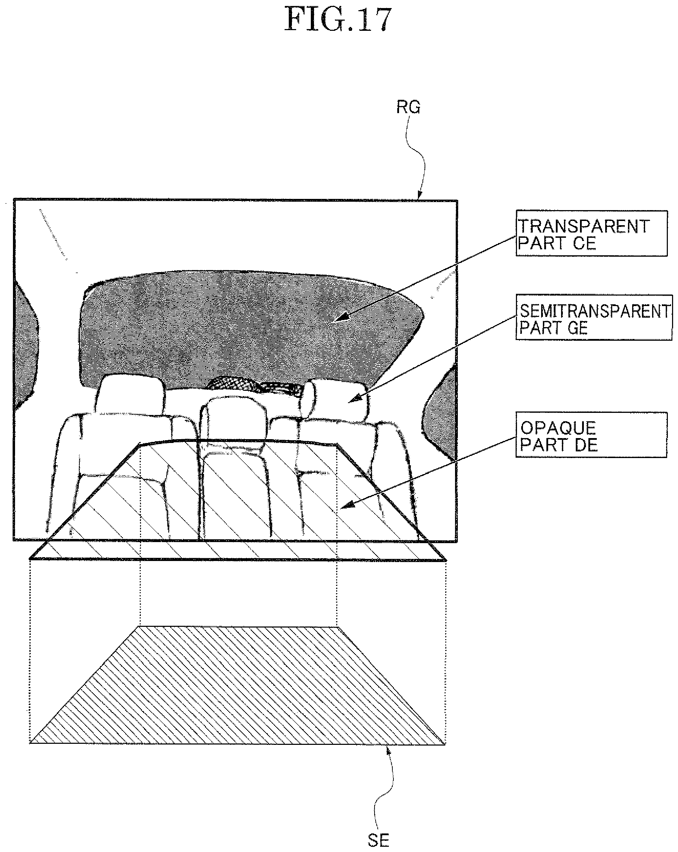

Fig. 17 is a view showing a semitransparent vehicle interior image RG where the "opaque part DE," a "transparent part CE," and a "semitransparent part GE" are set on the vehicle interior image RP of a back side of the vehicle in the see-through back-view monitor system A2 according to Embodiment 2.

The see-through back-view monitor system A2 has a configuration where the side camera 1 of the see-through side-view monitor system A1 according to Embodiment 1 is replaced by the back camera 21. Similarly to the above described case of the side camera 1, a digital conversion on the real camera image from the back camera 21 is performed and a viewpoint conversion into the virtual camera image to be viewed from a driver's viewpoint is performed. For the virtual camera image, a projected vehicle body image of Fig.11 is formed with respect to the backward direction of the vehicle. The projected image area of the vehicle body is adapted to the virtual camera image of the back camera 21 and the vehicle interior image to be superimposed.

When the vehicle interior image from the driver's viewpoint is superimposed, as shown in Fig. 17, a shaded area corresponding to a shade SE of the vehicle body by a vertical projection is set as the "opaque part DE" with transmissivity of 0 % and also a window glass part is set as the "transparent part CE" with transmissivity of 100 %. Further, other areas are set as the "semitransparent parts GE" which are obtained by performing an α blend with arbitrary transmissivities capable of being determined by a user and which are semitransparent.

In the current see-through back-view monitor system, the camera is installed so as to image a vicinity of a bumper and sense for a vehicle is to be obtained with help from the imaged bumper or display of trajectory lines.

To the contrary, in case of Embodiment 2, similarly to the see-through side-view monitor system described in Embodiment 1, sense for vehicle is to be obtained by superimposing the vehicle interior image previously photographed in a backward direction from a driver's viewpoint. Accordingly, it is possible to vividly express the image expressed by the see-through back-view monitor system A2 as an image as if it is viewed through a backward of the vehicle body. Furthermore, other operations are the same as those in Embodiment 1 and therefore detailed explanation is omitted.

### Next, effects will be explained.

In the see-through back-view monitor system A2 of Embodiment 2, In addition to the effects (1) to (9) of Embodiment 1, the following effect can be obtained:
(11) The on-vehicle blind spot camera is a back camera 21 used in the see-through back-view monitor system A2 which displays a back part from the vehicle which is in a blind spot from the driver as an image to be viewed through from a vehicle interior on the monitor 3.

Accordingly, a space understanding, for example, sense for a position and a distance between a vehicle and a vehicle stop line, a vehicle stop curb, a wall and the like, which are required when moving backwardly during parking or sense for a position and a distance between the vehicle and an approaching following vehicle when driving can be intuitively performed. Therefore, large contribution to quick parking and safe driving can be obtained.

### EMBODIMENT 3

Embodiment 3, using a blind spot eliminating front camera disposed at a front position of a vehicle as an on-vehicle blind spot camera, is an example of a see-through front-view monitor system where a front portion of the vehicle which is in a blind spot from the driver, is displayed on a monitor as an image to be viewed through from a vehicle interior.

### First, configuration will be explained.

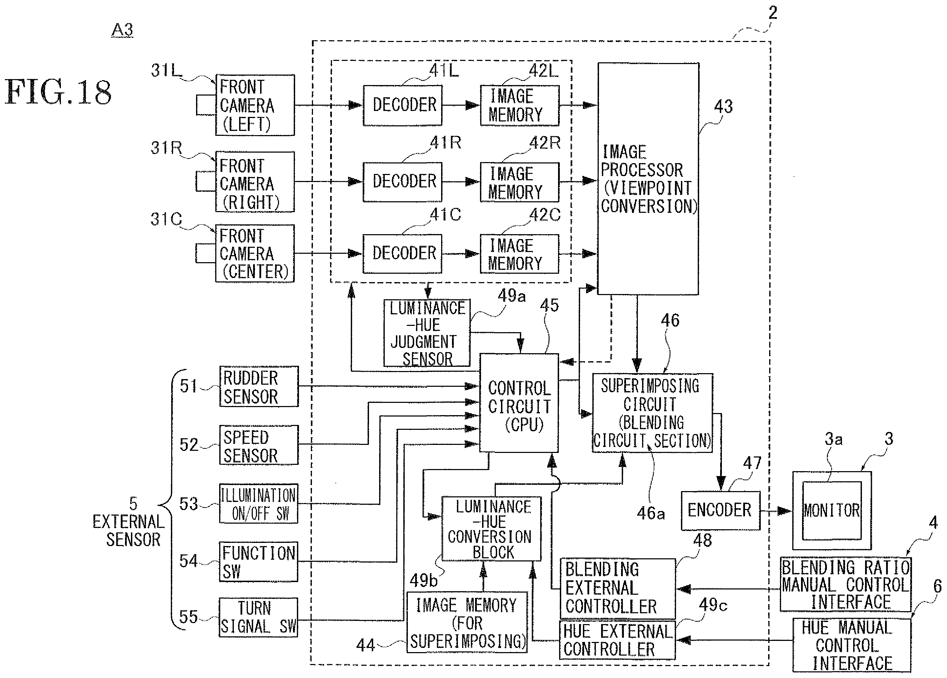

Fig. 18 is an entire system block diagram showing the see-through front-view monitor system A3 (an example of a vehicle peripheral image display system) according to Embodiment 3.

The see-through front-view monitor system A3 according to Embodiment 3 includes, as shown in Fig. 18, a left front camera 31L (on-vehicle blind spot camera), a right front camera 31R (on-vehicle blind spot camera), a center front camera 31C (on-vehicle blind spot camera), an image processing control unit 2 (monitor image generating means), a monitor 3, a blending ratio manual control interface 4 (blending ratio manual operation means), an external sensor 5, and a hue manual control interface 6 (vehicle interior image color manual operation means).

In case of the front-view monitor system, many cameras are often provided even under the present circumstances, and left, right and center three cameras may be used. Therefore, in case of the see-through front-view monitor system A3, an example is explained in which three cameras: the left front camera 31L, the right front camera 31R and the center front camera 31C are used.

The external sensor 5 includes, as shown in Fig.18, a turn signal switch 55 in addition to a rudder sensor 51, a speed sensor 52, an illumination ON/OFF switch 53, and a function switch 54.

The image processing control unit 2 includes, as shown in Fig. 18, a left decoder 41L, a right decoder 41R, a center decoder 41C, a left image memory 42L, a right image memory 42R, a center image memory 42C, an image processor 43, an image memory 44 (image storage section), a control circuit (CPU) 45, a superimposing circuit 46 (image composite circuit), an encoder 47, a blending external controller 48, a luminance-hue judgment sensor 49a (external image color judging section), a luminance-hue conversion block 49b (vehicle interior image color automatic adjusting section), and a hue external controller 49c (vehicle interior image color external controller). Moreover, each configuration is the same as that in Fig. 1 showing Embodiment 1.

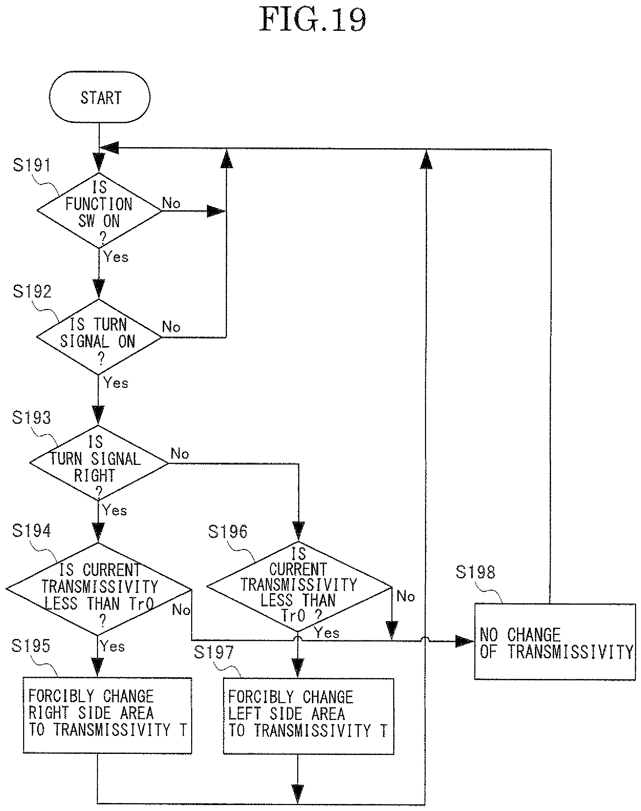

Fig. 19 is a flowchart showing a flow of a blending ratio sensor cooperative control processing performed in the control circuit 45 in the see-through front-view monitor system A3 according to Embodiment 3. Hereinafter, each step will be explained. Here, it is assumed that a user changes left and right blending ratio with arbitrary setting and a current transmissivity Tr1 is, for example, set to 30%.

In step S191, it is judged whether or not the function switch 54 is ON. In the case of Yes (i.e., the switch 54 is ON), the process moves to step S192. In the case of No (i.e., the switch 54 is OFF), the judgment in step S191 is repeated.

In step S192, following to a judgment that the function switch is ON in step S191, it is judged whether or not an ON signal is being output from the turn signal switch. In the case of Yes (i.e., in a turn signal blinking on state), the process moves to step S193. In the case of No (i.e., in a turn signal off state), the process returns to step S191.

In step S193, following a judgment that the On signal is being output from the turn signal switch 55 in step S192, it is judged whether or not the signal from the turn signal switch 55 is a right turning signal. In the case of Yes (i.e., the turn signal is right), the process moves to S194. In the case of No (i.e., the turn signal is left), the process moves to step S196.

In step S194, following a judgment that the turn signal is right in step S193, it is judged whether or not the current transmissivity Tr1 is less than a set value Tr0. In the case of Yes (i.e., Tr1 < Tr0), the process moves to step S195. In the case of No (i.e., Tr1 >= Tr0), the process moves to step S196.

Here, the set value Tr0 is a transmissivity threshold value to ensure a rightward field of view, which is in a turning direction.

In step S195, following a judgment that Tr1 < Tr0 in step S194, the transmissivity of the right front camera image area is forcibly changed from the current transmissivity Tr1 to a transmissivity T (for example, Tr0) and the process returns to step S191.

In step S196, following a judgment that the turn signal is left in step S193, it is judged whether or not the current transmissivity Tr1 is less than the set value Tr0. In the case of Yes (i.e., Tr1 < Tr0), the process moves to step S197. In the case of No (i.e., Tr1 >= Tr0), the process moves to step S198.

Here, the set value Tr0 is a transmissivity threshold value to ensure a leftward field of view which is in a turning direction.

In step S197, following a judgment that Tr1 < Tr0 in step S196, a transmissivity of the left front camera image area is forcibly changed from the current transmissivity Tr1 to a transmissivity T (for example, Tr0) and the process returns to step S191.

In step S198, following a judgment that Tr1 >= Tr0 in step S194 or step S196, the current transmissivity Tr1 is not changed and kept and the process returns to the step S191. Moreover, other configurations are the same as those in Embodiment 1.

### Next, operations will be explained.

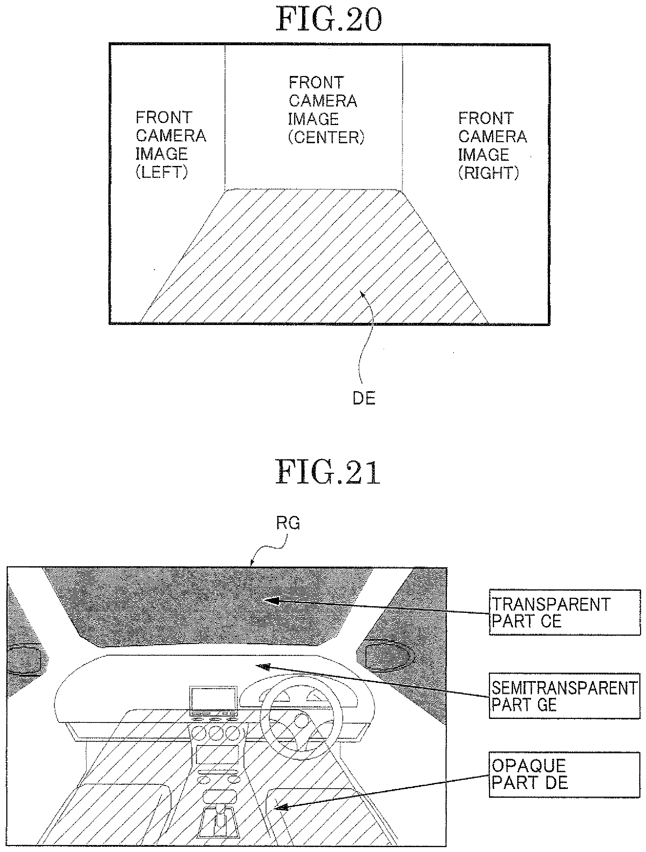

Fig. 20 is a view showing an image where the "opaque part DE" is set on left, right and center divided areas in a front camera image in the see-through front-view monitor system A3 according to Embodiment 3. Fig. 21 is a view showing the semitransparent vehicle interior image RG where the "opaque part DE," the "transparent part CE," and the "semitransparent part GE" are set on the vehicle interior image RP in the see-through front-view monitor system A3 according to Embodiment 3.

In Embodiment 3, digitization and viewpoint conversion on the image of each of the front cameras 31L, 31R, 31C are performed and a superimposing screen which is a vehicle interior image where the vehicle shape is vertically projected is superimposed thereon to obtain a composite image.

In the vehicle interior image RP which is previously photographed from the driver's viewpoint in a forward direction, an area where the vehicle shape is vertically projected on a road surface is set as the "opaque part DE" with transmissivity 0 %. A wide angle screen image of more than 180 degrees is displayed on an area in the vehicle interior image RP other than the "opaque part DE."

In case where the wide angle screen image of more than 180 degrees is the viewpoint conversion image from the driver's viewpoint, as shown in Fig.20, a screen is formed where a camera image from the center front camera 31C, a camera image from the left front camera 31L, and a camera image from the right front camera 31R are composed at a center area, a left area, and a right area, respectively.

That is, the image using cameras is configured to ensure field of view and is often displayed as one screen from the left, right and center front cameras 31L, 31R, 31C. In this case, generally, each of the camera images is composed and the wide angle screen image of 180 degrees or more is displayed.

The semitransparent vehicle interior image RG which is divided into "the opaque part DE," "the transparent part CE," and "the semitransparent part GE" is superimposed on the image shown in Fig.20 and as a result, as shown in Fig. 21, the image as if an outside of the front side of the vehicle is viewed through the vehicle interior is provided to the driver.

Therefore, in case of the see-through front-view monitor system A3 of Embodiment 3, similarly to the see-through side-view monitor system A1 and the see-through back-view monitor system A2, an image with which vehicle shape and size which are a so-called sense for the vehicle can be understood at one view and a blind spot is eliminated and which can be intuitively understood when avoiding danger can be provided.

### [Transmissivity Automatic Adjustment Operation in Conjunction with Turn Signal]

In case where the turn signal switch 55 responds, an operation of turning a handle, that is, an operation of changing a moving direction leftward or rightward after slowing down or stopping is performed. In this case, information of an approaching vehicle from left and right is more important than the field of view at the center portion.

To the contrary, in Embodiment 3, since the image area is divided into three by the three front cameras 31L, 31R, 31C, in conjunction with the turn signal switch 55 outputting a switch signal when changing the moving direction by turning the handle left or right after slowing down or stopping, the "semitransparent part GE" of the transmissivities of the three divided image areas are automatically adjusted.

In case where the right turn signal is detected and the current transmissivity Tr1 is less than the set value Tr0, in the flowchart of Fig. 19, the process moves from step S191 to step S192, step S193, step S194 and step S195. Then, in step S195, since the field of view in the right area is more important than that in the center area, the system performs an α blend operation for automatically increasing transmissivity in order to ensure a field of view.

In case where the left turn signal is detected and the current transmissivity Tr1 is less than the set value Tr0, in the flowchart of Fig. 19, the process moves from step S191 to step S192, step S193, step S196 and step S197. Then, in step S197, since the field of view in the left area is more important than that in the center area, the system performs an α blend operation for automatically increasing transmissivity in order to ensure a field of view.

Therefore, when turning right, the right field of view is more clearly provided and when turning left, the left field of view is more clearly provided. As a result, information on an approaching vehicle from a side to turn can be appropriately understood.

Here, during the above operation, it may be judged whether the turn signal is left or right and the transmissivity may be changed by weighting only one of the left and right turn signals. Furthermore, the other operations are the same as those in Embodiment 1, and therefore explanation is not repeated here.

### Next, effects will be explained.

According to the see-through front-view monitor system A3 of Embodiment 3, the following effect can be obtained in addition to the effects (1) to (9) of Embodiment 3.
(12) The on-vehicle blind spot camera is each of left, right and center front cameras 31L, 31R, 31C used in the see-through front-view monitor system A3 displaying a front part of the vehicle which is in a blind spot from the driver on the monitor 3 provided in the vehicle interior.

Therefore, sense for a space, for example, sense for positions of and a distance between an obstacle in a forward position of the vehicle and the vehicle, which is required when starting straight moving or turning from a stopping or slowing down state, or sense for positions of and a distance between an approaching vehicle and the vehicle can be intuitively understood and larger contribution to safe driving can be achieved.

While the vehicle peripheral image display system of the present invention is explained as described above based on Embodiments 1 to 3, specific configurations are not limited thereto and it is to be understood that variations and modifications will be apparent without departing from the scope of the claimed invention according to each claim.

In each of Embodiments 1 to 3, an example where the luminance and hue of the semitransparent vehicle interior image RG to be superimposed on the virtual camera image is changed according to the judgment result of the luminance and hue of the external image has been shown. However, an example where saturation and brightness are added to the luminance and hue of the external image, and the semitransparent vehicle interior image RG to be superimposed on the virtual camera image is changed according to a judgment result of at least one of the luminance, hue, saturation and brightness may be included in the present invention.

In Embodiments 1 to 3, examples where, as the semitransparent vehicle interior image RG to be superimposed on the virtual camera image, a previously prepared vehicle interior image RP which is divided into three parts, that is "the opaque part DE," "the transparent part CE," and "the semitransparent part GE." However, an example where the entire vehicle interior image RP is set as "the semitransparent part GE" may be included. Furthermore, an example where the entire vehicle interior image RP is set as "the semitransparent part GE" and "the opaque part DE" is bordered and displayed may be included. Moreover, an example where "a shade part" by being filled is set instead of "the opaque part DE" may be included. Furthermore, an example where the previously prepared vehicle interior image RP is divided into two parts, that is, "the opaque part DE" (or "the shade part") and "the semitransparent part GE" may be included. Furthermore, an example where the previously prepared vehicle interior image RP has "the opaque part DE" (or "the shade part") and "a transparent part where transmissivity is gradationally changed" which are continuously changed may be included.

### INDUSTRIAL APPLICABILITY

As a vehicle peripheral image display system, the example of the see-through side-view monitor system A1 is shown in Embodiment 1, the example of the see-through back-view monitor system A2 is shown in Embodiment 2, and the example of the see-through front-view monitor system A3 is shown in Embodiment 3. However, the vehicle peripheral image display system can be applied to a monitor system where a monitor is shared and one of a side-view, a back-view, and a front-view, and the like is selected or automatically switched according to a given condition.

## Claims

1. A vehicle peripheral image display system (Al), comprising
an on-vehicle blind spot camera (1) provided on a vehicle and imaging a peripheral of the vehicle;
a monitor (3) set at a position in a vehicle interior of the vehicle, and viewed from a position of a driver; and
a monitor image generating means (2) generating a display image to be displayed on the monitor based on a real camera image input from the on-vehicle blind spot camera, wherein
the monitor image generating means includes:
an image processor (43) performing a viewpoint conversion of the real camera image input from the on-vehicle blind spot camera into a virtual camera image to be viewed from a position of a driver's viewpoint;
an external image color judging section (49a) judging a color of an external image from the on-vehicle blind spot camera based on luminance or hue;
a vehicle interior image color automatically adjusting section (49b) automatically adjusting luminance or hue of a semitransparent vehicle interior image which is a semitransparent image of a vehicle interior image based on the color judgment result of the external image so as to enhance visibility for the external image; and
an image component composite circuit (46) performing an image composition superimposing the semitransparent vehicle interior image from the vehicle interior image color automatically adjusting section on the virtual camera image from the image processor to generate a composite image expressing the virtual camera image to be viewed through the semitransparent vehicle interior image,
wherein;
the monitor image generating means (2) has an image storage section (44) storing a vehicle interior still image which is previously photographed from the driver's viewpoint as the vehicle interior image, and
the vehicle interior image color automatically adjusting section (49b) generates a semitransparent image of the vehicle interior image from the image storage section to obtain the semitransparent vehicle interior image,
wherein;
the external image color judging section (49a) judges average luminance and hue of the external image from the on-vehicle blind spot camera; and
the vehicle interior image color automatically adjusting section (49b) automatically adjusts the luminance and hue of the semitransparent vehicle interior image based on a color judgment result of the external image by the external image color judging sensor,
wherein the monitor image generating means (2) has a hue conversion display control mode in which the average hue of the external image is loaded from the external image color judging section, and
the hue of the semitransparent vehicle interior image is converted into a hue of a complementary color which is in a complementary color area in a hue circle with respect to the hue of the external image to be displayed when a hue deviation between said average hue and a set value is less than a predetermined threshold value.

2. The vehicle peripheral image display system according to claim 1, wherein
the monitor image generating means (2) has an external image luminance follow-up display control mode in which the average luminance of the external image is loaded from the external image color judging section, the luminance of the semitransparent vehicle interior image is differentiated from that of the external image is displayed when the luminance detection value is a first set value (Y1) indicating a dark threshold value or more,
the luminance of the semitransparent vehicle interior image is increased to be differentiated from the luminance of the external image is displayed when the luminance detection value is less than the first set value (Y1) and a second set value (Y2) indicating a night threshold value or more, and
the luminance of the semitransparent vehicle interior image is inverted and black lines are displayed by white lines is displayed when the luminance detection value is less than the second set value (Y2).

3. The vehicle peripheral image display system according to claim 1, wherein
the monitor image generating means (2) has a luminance abrupt change handling display control mode in which the average luminance of the external image is loaded from the external image color judging section, and the luminance of the semitransparent vehicle interior image is decreased to be entirely blackish is displayed when said average luminance is more than a third set value (Y3) indicating an upper limit threshold value.

4. The vehicle peripheral image display system according to one of claims 1 to 3, wherein
the monitor image generating means (2) has the hue conversion display control mode in which the average hue of the external image is loaded from the external image color judging section, the hue of the semitransparent vehicle interior image is kept is displayed when the hue deviation between the hue detection value and a set value is a first threshold value (Z1) or more,
the predetermined threshold value is a second threshold value, the hue of the semitransparent vehicle interior image is kept and color is brighter is displayed when the hue deviation between the hue detection value and the set value is less than the first threshold value (Z1) and the second threshold value (Z2) or more.

5. The vehicle peripheral image display system according to one of claims 1 to 4, further comprising:
a vehicle speed detecting means (52) detecting a vehicle speed,
wherein the monitor image generating means (2) has an alarm display control mode in which
a vehicle speed detection value from the vehicle speed detecting means is loaded, and
a hue of the entire semitransparent vehicle interior image is converted into a hue to make the driver recognize an alarm and is displayed when the vehicle detection value is a set value or more.

6. The vehicle peripheral image display system according to one of claims 1 to 5, wherein
the monitor image generating means (2) has a vehicle interior image color external controller (49c) arbitrarily adjusting the luminance or hue of the semitransparent vehicle interior image in accordance with an operation to a vehicle interior image color manual operation means (6) from outside.

7. The vehicle peripheral image display system according to one of claims 1 to 6, wherein
the image composite circuit (46) has a blending circuit section setting, within the semitransparent vehicle interior image to be superimposed on the virtual camera image, an area where the vehicle is projected on a road surface as an opaque part with transmissivity of 0 %, an area corresponding to a window glass of the vehicle as a transparent part with transmissivity of 100 %, an area other than the opaque part and the transparent part as a semitransparent part with an arbitrary transmissivity.

## Patentansprüche

1. Anzeigesystem (A1) für ein Bild des Umfelds eines Fahrzeugs, welches aufweist:
eine Fahrzeug-Totwinkelkamera (1), die an einem Fahrzeug angeordnet ist und ein Umfeld des Fahrzeugs abbildet;
einen Monitor (3), der an einer Position in einem Fahrzeuginneren des Fahrzeugs angebracht ist und von einer Position eines Fahrers aus betrachtet wird; und
ein Monitorbild-Erzeugungsmittel (2), das ein Anzeigebild, das auf dem Monitor auf der Grundlage eines realen Kamerabilds, das von der Fahrzeug-Totwinkelkamera eingegeben wird, anzuzeigen ist, erzeugt,
wobei
das Monitorbild-Erzeugungsmittel enthält:
einen Bildprozessor (43), das eine Betrachtungspunktumwandlung des realen Kamerabilds, das von der Fahrzeug-Totwinkelkamera eingegeben wurde, in ein virtuelles Kamerabild, das von einer Position des Betrachtungspunkts eines Fahrers aus zu betrachten ist, durchführt;
einen Farbbeurteilungsteil (49a) für ein externes Bild, der eine Farbe eines externen Bilds von der Fahrzeug-Totwinkelkamera auf der Grundlage von Helligkeit oder Farbton beurteilt;
einen Teil (49b) zum automatischen Einstellen der Farbe eines Fahrzeug-Innenbilds, der automatisch die Helligkeit oder den Farbton eines semitransparenten Fahrzeug-Innenbilds, das ein semitransparentes Bild eines Fahrzeug-Innenbilds ist, auf der Grundlage des Farbbeurteilungsergebnisses des externen Bilds so einstellt, dass die Sichtbarkeit für das externe Bild erhöht wird; und
eine Bildkomponenten-Zusammensetzungsschaltung (46), die eine Bildzusammensetzung durchführt, bei der das semitransparente Fahrzeug-Innenbild von dem Teil zum automatischen Einstellen der Farbe des Fahrzeug-Innenbilds dem virtuellen Kamerabild von dem Bildprozessor überlagert wird, um ein zusammengesetztes Bild zu erzeugen, das das virtuelle Kamerabild ausdrückt, das durch das semitransparente Fahrzeug-Innenbild zu betrachten ist,
wobei:
das Monitorbild-Erzeugungsmittel (2) einen Bildspeicherteil (44) hat, der ein Fahrzeuginnen-Standbild speichert, das vorher von dem Betrachtungspunkt des Fahrers aus als das Fahrzeuginnenbild fotografiert wurde, und
der Teil (49b) zum automatischen Einstellen der Farbe des Fahrzeug-Innenbilds ein semitransparentes Bild des Fahrzeug-Innenbilds von dem Bildspeicherteil erzeugt, um das semitransparente Fahrzeug-Innenbild zu erhalten,
wobei:
der Farbbeurteilungsteil (49a) für das externe Bild die durchschnittliche Helligkeit und den Farbton des externen Bilds von der Fahrzeug-Totwinkelkamera beurteilt; und
der Teil (49b) zum automatischen Einstellen der Farbe des Fahrzeug-Innenbilds automatisch die Helligkeit und den Farbton des semitransparenten Fahrzeug-Innenbilds auf der Grundlage eines Farbbeurteilungsergebnisses des externen Bilds durch den Farbbeurteilungssensor für das externe Bild einstellt,
wobei das Monitorbild-Erzeugungsmittel (2) einen Farbtonumwandlungs-Anzeigesteuermodus hat, in welchem der durchschnittliche Farbton des externen Bilds von dem Farbbeurteilungsteil für das externe Bild geladen wird, und
der Farbton des semitransparenten Fahrzeug-Innenbilds in einen Farbton einer komplementären Farbe, die in einem komplementären Farbbereich in einem Farbtonkreis mit Bezug auf den Farbton des anzuzeigenden externen Bilds umgewandelt wird, wenn eine Farbtonabweichung zwischen dem durchschnittlichen Farbton und einem gesetzten Wert kleiner als ein vorbestimmter Schwellenwert ist.

2. Anzeigesystem für ein Bild des Umfelds eines Fahrzeugs nach Anspruch 1, bei dem
das Monitorbild-Erzeugungsmittel (2) einen Nachfolge-Anzeigesteuermodus für externe Bildhelligkeit hat, in welchem die durchschnittliche Helligkeit des externen Bilds aus dem Farbbeurteilungsteil für externe Bilder geladen ist,
die Helligkeit des semitransparenten Fahrzeug-Innenbilds, die von der des externen Bilds unterschieden wird, angezeigt wird, wenn der Helligkeitserfassungswert ein erster gesetzter Wert (Y1) ist, der einen dunklen Schwellenwert oder mehr anzeigt,
die Helligkeit des semitransparenten Fahrzeug-Innenbilds, die erhöht ist, um von der Helligkeit des externen Bilds unterschieden zu werden, angezeigt wird, wenn der Helligkeitserfassungswert kleiner als der gesetzte erste Wert (Y1) und ein zweiter gesetzter Wert (Y2), der einen Nachtschwellenwert oder mehr anzeigt, ist, und
die Helligkeit des semitransparenten Fahrzeug-Innenbilds, die invertiert ist und schwarze Linien durch weiße Linien angezeigt werden, angezeigt wird, wenn der Helligkeitserfassungswert kleiner als der zweite gesetzte Wert (Y2) ist.

3. Anzeigesystem für ein Bild des Umfelds eines Fahrzeugs nach Anspruch 1, bei dem
das Monitorbild-Erzeugungsmittel (2) einen Anzeigesteuermodus für abrupte Helligkeitsänderungshandhabung hat, in welchem die durchschnittliche Helligkeit des externen Bilds aus dem Farbbeurteilungsteil für externe Bilder geladen ist und die Helligkeit des semitransparenten Fahrzeug-Innenbilds, die herabgesetzt ist, um gänzlich schwärzlich zu sein, angezeigt wird, wenn die durchschnittliche Helligkeit größer als ein dritter gesetzter Wert (Y3) ist, der einen oberen Grenzschwellenwert anzeigt.

4. Anzeigesystem für ein Bild des Umfelds eines Fahrzeugs nach einem der Ansprüche 1 bis 3, bei dem
das Monitorbild-Erzeugungsmittel (2) den Farbtonumwandlungs-Anzeigesteuermodus hat, in welchem der durchschnittliche Farbton des externen Bilds aus dem Farbbeurteilungsteil für externe Bilder geladen ist,
der Farbton des semitransparenten Fahrzeug-Innenbilds, der gehalten wird, angezeigt wird, wenn die Farbtonabweichung zwischen dem Farbton-Erfassungswert und einem gesetzten Wert ein erster Schwellenwert (Z1) oder mehr ist,
der vorbestimmte Schwellenwert ein zweiter Schwellenwert ist, der Farbton des semitransparenten Fahrzeug-Innenbilds, der gehalten wird, und die Farbe, die heller ist, angezeigt werden, wenn die Farbtonabweichung zwischen dem Farbton-Erfassungswert und dem gesetzten Wert kleiner als der erste Schwellenwert (Z1) und der zweite Schwellenwert (Z2) oder mehr ist.

5. Anzeigesystem für ein Bild des Umfelds eines Fahrzeugs nach einem der Ansprüche 1 bis 4, welches weiterhin aufweist:
ein Fahrzeuggeschwindigkeits-Erfassungsmittel (52), das eine Fahrzeuggeschwindigkeit erfasst,
wobei das Monitorbild-Erzeugungsmittel (2) einen Alarmanzeige-Steuermodus hat, in welchem
ein Fahrzeuggeschwindigkeits-Erfassungswert von dem Fahrzeuggeschwindigkeits-Erfassungsmittel geladen ist, und
ein Farbton des gesamten semitransparenten Fahrzeug-Innenbilds in einen Farbton umgewandelt ist, um zu bewirken, dass der Fahrer einen Alarm erkennt, und angezeigt wird, wenn der Fahrzeug-Erfassungswert ein gesetzter Wert oder mehr ist.

6. Anzeigesystem für ein Bild des Umfelds eines Fahrzeugs nach einem der Ansprüche 1 bis 5, bei dem
das Monitorbild-Erzeugungsmittel (2) eine externe Steuervorrichtung (49c) für die Farbe eines Fahrzeug-Innenbilds hat, die willkürlich die Helligkeit oder den Farbton des semintransparenten Fahrzeug-Innenbilds gemäß einer Betätigung eines manuellen Betätigungsmittels (6) für die Fahrzeug-Innenbildfarbe von außerhalb einstellt.

7. Anzeigesystem für ein Bild des Umfelds eines Fahrzeugs nach einem der Ansprüche 1 bis 6, bei dem
die Bildzusammensetzungsschaltung (46) einen Mischschaltungsteil hat, der innerhalb des dem virtuellen Kamerabild zu überlagernden semitransparenten Fahrzeug-Innenbilds einen Bereich, in welchem das Fahrzeug auf eine Straßenoberfläche projiziert wird als ein undurchsichtiger Teil mit einer Durchlässigkeit von 0%, einen Bereich entsprechend einem Fensterglas des Fahrzeugs als einem durchsichtigen Teil mit einer Durchlässigkeit von 100%, und einen Bereichs, der ein anderer als der undurchsichtige Teil und der durchsichtige Teil ist, als einen semitransparenten Teil mit einer willkürlichen Durchlässigkeit setzt.

## Revendications

1. Système d'affichage d'image de périphérie de véhicule (A1), comprenant
une caméra embarquée pour les angles morts (1) prévue sur un véhicule et imageant une périphérie du véhicule ;
un moniteur (3) établi à une position dans un intérieur de véhicule du véhicule, et visualisé depuis une position d'un conducteur ; et
un moyen de génération d'image de moniteur (2) générant une image d'affichage à afficher sur le moniteur d'après une image de caméra réelle entrée depuis la caméra embarquée pour les angles morts, dans lequel
le moyen de génération d'image de moniteur comporte :
un processeur d'image (43) réalisant une conversion de points de vue de l'image de caméra réelle entrée depuis la caméra embarquée pour les angles morts en une image de caméra virtuelle à visualiser depuis une position d'un point de vue du conducteur ;
une section d'estimation de couleur d'image externe (49a) estimant une couleur d'une image externe provenant de la caméra embarquée pour les angles morts d'après une luminance ou une tonalité chromatique ;
une section de réglage automatique de couleur d'image d'intérieur de véhicule (49b) réglant automatiquement la luminance ou la tonalité chromatique d'une image d'intérieur de véhicule semi-transparente qui est une image semi-transparente d'une image d'intérieur de véhicule d'après le résultat d'estimation de couleur de l'image externe de façon à améliorer la visibilité pour l'image externe ; et
un circuit composite de composant d'image (46) réalisant une composition d'image superposant l'image d'intérieur de véhicule semi-transparente provenant de la section de réglage automatique de couleur d'image d'intérieur de véhicule sur l'image de caméra virtuelle provenant du processeur d'image pour générer une image composite exprimant l'image de caméra virtuelle à visualiser à travers l'image d'intérieur de véhicule semi-transparente,
dans lequel ;
le moyen de génération d'image de moniteur (2) a une section de stockage d'image (44) stockant une image fixe d'intérieur de véhicule qui est préalablement photographié depuis le point de vue du conducteur en tant qu'image d'intérieur de véhicule, et
la section de réglage automatique de couleur d'image d'intérieur de véhicule (49b) génère une image semi-transparente de l'image d'intérieur de véhicule provenant de la section de stockage d'image pour obtenir l'image d'intérieur de véhicule semi-transparente,
dans lequel ;
la section d'estimation de couleur d'image externe (49a) estime une luminance et une tonalité chromatique moyennes de l'image externe provenant de la caméra embarquée pour les angles morts ; et
la section de réglage automatique de couleur d'image d'intérieur de véhicule (49b) règle automatiquement la luminance et la tonalité chromatique de l'image d'intérieur de véhicule semi-transparente d'après un résultat d'estimation de couleur de l'image externe par le capteur d'estimation de couleur d'image externe,
dans lequel le moyen de génération d'image de moniteur (2) a un mode de commande d'affichage de conversion de tonalité chromatique dans lequel la tonalité chromatique moyenne de l'image externe est chargée depuis la section d'estimation de couleur d'image externe, et
la tonalité chromatique de l'image d'intérieur de véhicule semi-transparente est convertie en une tonalité chromatique d'une couleur complémentaire qui est dans une zone de couleur complémentaire dans un cercle chromatique par rapport à la tonalité chromatique de l'image externe à afficher lorsqu'un écart chromatique entre ladite tonalité chromatique moyenne et une valeur de consigne est inférieur à une valeur seuil prédéterminée.

2. Système d'affichage d'image de périphérie de véhicule selon la revendication 1, dans lequel
le moyen de génération d'image de moniteur (2) a un mode de commande d'affichage de suivi de luminance d'image externe dans lequel la luminance moyenne de l'image externe est chargée depuis la section d'estimation de couleur d'image externe,
la luminance de l'image d'intérieur de véhicule semi-transparente est différenciée de celle de l'image externe et est affichée lorsque la valeur de détection de luminance est une première valeur de consigne (Y1) indiquant une valeur seuil de noir ou plus,
la luminance de l'image d'intérieur de véhicule semi-transparente est augmentée pour être différenciée de la luminance de l'image externe et est affichée lorsque la valeur de détection de luminance est inférieure à la première valeur de consigne (Y1) et une deuxième valeur de consigne (Y2) indiquant une valeur seuil de nuit ou plus, et
la luminance de l'image d'intérieur de véhicule semi-transparente est inversée et des lignes noires sont affichées par des lignes blanches et est affichée lorsque la valeur de détection de luminance est inférieure à la deuxième valeur de consigne (Y2).

3. Système d'affichage d'image de périphérie de véhicule selon la revendication 1, dans lequel
le moyen de génération d'image de moniteur (2) a un mode de commande d'affichage de gestion de changement abrupt de luminance dans lequel la luminance moyenne de l'image externe est chargée depuis la section d'estimation de couleur d'image externe, et
la luminance de l'image d'intérieur de véhicule semi-transparente est diminuée pour être totalement noirâtre et est affichée lorsque ladite luminance moyenne est supérieure à une troisième valeur de consigne (Y3) indiquant une valeur seuil de limite supérieure.

4. Système d'affichage d'image de périphérie de véhicule selon l'une des revendications 1 à 3, dans lequel
le moyen de génération d'image de moniteur (2) a le mode de commande d'affichage de conversion de tonalité chromatique dans lequel la tonalité chromatique moyenne de l'image externe est chargée depuis la section d'estimation de couleur d'image externe,
la tonalité chromatique de l'image d'intérieur de véhicule semi-transparente est conservée et est affichée lorsque l'écart chromatique entre la valeur de détection de tonalité chromatique et une valeur de consigne est une première valeur seuil (Z1) ou plus,
la valeur seuil prédéterminée est une seconde valeur seuil,
la tonalité chromatique de l'image d'intérieur de véhicule semi-transparente est conservée et une couleur plus lumineuse est affichée lorsque l'écart chromatique entre la valeur de détection de tonalité chromatique et la valeur de consigne est inférieur à la première valeur seuil (Z1) et la seconde valeur seuil (Z2) ou plus.

5. Système d'affichage d'image de périphérie de véhicule selon l'une des revendications 1 à 4, comprenant en outre :
un moyen de détection de vitesse de véhicule (52) détectant une vitesse de véhicule,
dans lequel le moyen de génération d'image de moniteur (2) a un mode de commande d'affichage d'alarme dans lequel
une valeur de détection de vitesse de véhicule provenant du moyen de détection de vitesse de véhicule est chargée, et
une tonalité chromatique de l'image d'intérieur de véhicule semi-transparente entière est convertie en une tonalité chromatique pour amener le conducteur à reconnaître une alarme et est affichée lorsque la valeur de détection de véhicule est une valeur de consigne ou plus.

6. Système d'affichage d'image de périphérie de véhicule selon l'une des revendications 1 à 5, dans lequel
le moyen de génération d'image de moniteur (2) a un dispositif de commande externe de couleur d'image d'intérieur de véhicule (49c) réglant arbitrairement la luminance ou la tonalité chromatique de l'image d'intérieur de véhicule semi-transparente conformément à une opération d'un moyen d'opération manuelle de couleur d'image d'intérieur de véhicule (6) depuis l'extérieur.

7. Système d'affichage d'image de périphérie de véhicule selon l'une des revendications 1 à 6, dans lequel
le circuit composite d'image (46) a une section de circuit de mélange établissant, au sein de l'image d'intérieur de véhicule semi-transparente à superposer sur l'image de caméra virtuelle, une zone où le véhicule est projeté sur une surface de route en tant que partie opaque avec une transmissivité de 0 %, une zone correspondant à un verre à vitre du véhicule en tant que partie transparente avec une transmissivité de 100 %, une zone autre que la partie opaque et la partie transparente en tant que partie semi-transparente avec une transmissivité arbitraire.
